# EUROPEAN PATENT SPECIFICATION

(11) **EP 2 779 582 B1**
(45) Date of publication and mention of the grant of the patent: **02.09.2015**
(21) Application number: 14159522.3
(22) Date of filing: 13.03.2014
(51) Int. Cl.: H04L 29/08, G06F 9/44, H04W 4/00

(54) **Automatic mobile application discovery and integration in a mobile telecommunication device**
Automatische mobile Anwendungsentdeckung und Integration in eine mobile Telekommunikationsvorrichtung
Découverte et intégration d'application mobile automatique dans un dispositif de télécommunication mobile

(30) Priority: 15.03.2013 US 201313840726
(43) Date of publication of application: 17.09.2014
(73) Proprietor: SAP SE, 69190 Walldorf (DE)
(72) Inventor: Gonsalves, Michael, 69190 Walldorf (DE)
(74) Representative: Richardt Patentanwälte PartG mbB

(56) References cited:
- US-A1- 2004 250 238
- US-A1- 2011 179 397
- US-A1- 2011 283 269
- BURMESTER S ET AL: "Tool integration at the meta-model level: The Fujaba approach", 2004, INTERNATIONAL JOURNAL ON SOFTWARE TOOLS FOR TECHNOLOGY TRANSFER 2004 SPRINGER VERLAG DEU, VOL. 6, NR. 3, PAGE(S) 203 - 218, XP002728612, * the whole document *

## Description

### TECHNICAL FIELD

This description relates to integration of mobile applications.

### BACKGROUND

Mobile solutions are often composed of multiple applications and related services, all working together. In some situations, application users may adopt a standard set of such applications and related services from a single supplier, in an attempt to ensure that the various components will work well together. Furthermore, these applications are typically installed on a single device. However, in many scenarios, the best solutions to meet specific user needs are often made up of heterogeneous technologies in a hybrid landscape, combining best-in-class applications. Moreover, even in cases in which all components are obtained from a single supplier, there is no guarantee that the components will fit perfectly together. Consequently, integration of multiple mobile applications is often required, and typically represents a time-consuming, manually intensive, error prone, expensive, and generally inefficient process for obtaining the desired result.

Patent application US 2004/0250238 A1 concerns the generation of a mobile application using a metamodel, wherein the application is adapted to a second device.

### SUMMARY

It is an objective of embodiments of the invention to provide for a mobile telecommunication device, and a method for automatic mobile application discovery and integration. Said objective is solved by the subject matter of the independent claims. Advantageous embodiments are described in the dependent claims.

In one aspect, the invention relates to a method in a first mobile telecommunication device comprising a first mobile application, the first mobile telecommunication device comprising a metamodel selector, metadata manager, transformation engine, and an integration engine; the method comprising:
- providing a set of representation metamodels for mobile applications, wherein a representation metamodel of the set of representation meta-models comprises a set of attributes defining semantics of the characteristics of a given mobile application;
- determining, by the metadata manager, first application metadata of the first mobile application, the first application metadata describing characteristics of the first mobile application;
- selecting, by the metamodel selector, using the first application metadata and the set of attributes a representation metamodel of the set of representation metamodels for representing the characteristics of the first mobile application;
- transforming, by the transformation engine, the first application metadata into a first application-specifc metamodel instance of the selected representation metamodel; and
- integrating, by the integration engine, the first mobile application with a second mobile application using the first application-specific metamodel instance, thereby enhancing the functionality of the first mobile application with the functionality of the second mobile application.

For example, the second mobile application may be installed in a second mobile telecommunication device that is connected to the first mobile telecommunication device via a digital telecommunication network.

For example, the characteristics may indicate the properties of the systems on which the first mobile application may run and also systems on which other mobile applications to be integrated with the first mobile application can run. The characteristics may further indicate data structures used by the first mobile application, and/or functionality of the first mobile applications. The properties of a system may for example comprise the type of operating system that runs on the system, and/or the software and/or hardware configuration of the system.

For example, an attribute of the set of attributes may be a specification that defines a property and/or characteristic of mobile applications. The set of attributes may be described using characters that can be read in order to extract the semantic of a given characteristic of a mobile application. The set of attributes may further describe processes, and data that are part of the characteristics of a mobile application.

The first application-specific metamodel instance refers to a particular instantiation of the selected representation metamodel by for example assigning particular values to attributes of the set of attributes.

The term "semantics" as used herein refers to the meaning of a characteristic (that is described with a programming language e.g. as a character) as interpreted by a software or hardware component having access to the characteristic. The software and/or hardware component may evaluate the meaning of the characteristic in order to use it in processing tasks involving the characteristic.

For example, the first mobile application may have multiple characteristics that indicate multiple respective processes each of which used by the first mobile application to retrieve data from a respective data source. A single attribute in the set of attributes may be used to cover all these processes which may be for example defined as "I/O action".

For example, the first mobile application is comprised in the first mobile telecommunication device, and integrating the first and second mobile applications comprises installing the second mobile application in the first mobile telecommunication device.

In an alternative example, no installation may be required in case the first and second mobile applications are comprised in separate mobile telecommunication devices.

The integrating may comprise adding the functionality of the second mobile application to the first mobile application. For example, the first mobile application integrates with the second mobile application to perform a given task. Adding the functionality of the second mobile application to the first mobile application may comprise for example adding a link to the second application in the first mobile application e.g. in the form of a button in a user interface of the first mobile application such that when the button is clicked on the second mobile application may be executed.

For example, when the first mobile application has either a required or optional set of tasks that are satisfied by some other, possibly undetermined, mobile applications, this set may be described as a set of needs (which are part of the characteristics of the first mobile application) using the representation metamodel to define a model of these needs. This may for example define a set of standard integration points that can be matched against mobile applications that can satisfy the requirements or needs.

These features may be advantageous as they may save resources in the first mobile telecommunication device that would otherwise be required for integrating the first mobile application with the second mobile application using conventional methods. For example, the set of the representation metamodels provide the first mobile application with an ability to be described in a generic, common, high level language. In other words, rather than focusing on specific details of an individual integration between first and second mobile applications, and explicitly mapping semantics and data from one such application to the other, the selected representation metamodel enables to generate for the first mobile application its self-describing application-specific metamodel instance, independently of any specific integration with any other mobile application. For example, it may occur that the second mobile application may not even exist at a time that the application-specific metamodel instance is created.

Another advantage may be that a complex manual mapping and transformation process may be prevented as the present method may be automated.

Another advantage may be that these features may reduce the time required to integrate multiple applications compared to non-automated methods.

The usage of representation metamodels may allow a generic high-level language for describing systems, data structures, and functionality while still allowing the actual low-level implementation in each system to still remains system-specific and possibly proprietary.

According to one embodiment, the first mobile telecommunication device is connected to a server via a digital telecommunication network, wherein the set of representation metamodels and a plurality of application-specific metamodel instances including the first application-specific metamodel instance are stored in the server.

This embodiment may be advantageous as it may provide a centralized access to the representation metamodels which may then facilitate the integration of multiple applications not only on a single device but on multiple devices having access to the server.

According to one embodiment, the characteristics of the first mobile application comprise first private characteristics and first extended characteristics, wherein the first private characteristics indicate software and/or hardware configurations required for running the first mobile application, wherein the first extended characteristics are characteristics to be fulfilled by the second mobile application in order to be integrated with the first mobile application; wherein integrating comprises:
- receiving a request to integrate the second mobile application with the first mobile application;
- determining second application metadata of the second mobile application, the second application metadata describing characteristics of the second mobile application, wherein the characteristics of the second mobile application comprise second private characteristics, wherein the second private characteristics indicate software and/or hardware configurations required for running the second mobile application;
- mapping the second private characteristics with at least part of the first application-specific metamodel instance that represents the first extended characteristics;
- integrating the second mobile application with the first mobile application based on the mapping.

For example, the characteristics of the second mobile application may further comprise second extended characteristics, wherein the second extended characteristics are characteristics to be fulfilled by another mobile application in order to be integrated with the second mobile application;

For example, the mobile telecommunication device may store information indicative of the relation between the first extended characteristics and other private characteristics of respective other mobile applications (e.g. the second private characteristics of the second mobile application). Said information may indicate for example how the other application can be linked from the first application and/or indicate where to insert instructions in the first mobile application code such that the other application can be invoked/executed from within the first mobile application at the runtime. The information may also include the libraries to be included in order to integrated the other mobile application with the first mobile application.

According to one embodiment, the mapping comprises transforming the second application metadata into a second application-specific metamodel instance of the selected representation metamodel (or another representation metamodel of the set or representation model); comparing the at least part of the first application-specific metamodel instance that represents the first extended characteristics with at least part of the second application-specific metamodel instance that represents the second private characteristics.

The second private characteristics may comprise a second set of instructions that may be used to install the second mobile application in mobile telecommunication devices running with any one of the OS systems e.g. iOS, Android etc. and also having different software/hardware configurations. For example, the second set of instructions may be used in the integration step in order to install the second mobile application in the first mobile telecommunication device.

According to one embodiment, the characteristics of the first mobile application comprise first private characteristics and first extended characteristics, wherein the first private characteristics indicate features of the first mobile application, wherein the first extended characteristics are characteristics to be fulfilled by the second mobile application in order to be integrated with the first mobile application; wherein integrating comprises:
- reading at least part of the first application specific instance that represents the first extended characteristics for determining that the second mobile application is to be integrated with the first mobile application;
- searching in the server an application-specific metamodel instance having private characteristics that match the first extended characteristics, wherein the searched application-specific metamodel instance corresponds to the second mobile application.

This embodiment may provide an automatic method for integrating mobile applications which may thus further reduce the time required to integrate multiple applications compared to manual mapping methods.

According to one embodiment, the method further comprises: determining that there are not enough resources to run the second mobile application in the first mobile telecommunication device, wherein searching comprises searching an application-specific metamodel instance having private characteristics that match the first extended characteristics and that corresponds to a mobile application that is comprised in another mobile telecommunication device, wherein the searched application-specific metamodel instance corresponds to the second mobile application which is in a second mobile telecommunication device connected to the first mobile telecommunication device via a digital telecommunication network.

This embodiment may be advantageous as it may further save resources in the first mobile telecommunication device by sharing the execution of the first and second mobile applications with the second mobile telecommunication device.

For example, available processing resources (e.g. the level of remaining battery of the first mobile telecommunication device and/or the CPU usage which may be due to other applications running on the first mobile telecommunication device and/or the available storage is not enough to store the second mobile application) in the first mobile telecommunication device are below required minimum processing resources by the first mobile application and the second mobile application.

For example, the first and second mobile telecommunication devices run different operating systems.

According to one embodiment, the method further comprises transforming the second application metadata into a second application-specific metamodel instance of a second selected representation metamodel; wherein comparing the second private characteristics with the first extended characteristics is performed using the first and second application-specific metamodel instances.

For example, the second selected representation metamodel may comprise the selected representation metamodel for the first mobile application.

For example, the comparison may be performed by reading the first and second application-specific metamodel instances to identify attributes that correspond/match the first extended characteristics and the second private characteristics respectively.

According to one embodiment, selecting the representation metamodel comprises:
- using the first application metadata for mapping each characteristic of at least part of the characteristics of the first mobile application with the set of attributes;
- identifying for each characteristic a corresponding attribute using the mapping;
- assigning to each characteristic of the at least part of the characteristics of the first mobile application a metric indicative of a degree of a match between that characteristic and the corresponding attribute in the set of mapped attributes;
- selecting the representation metamodel using the metrics.

For example, the degree of match may be described in percentage of match between a characteristic and the corresponding attribute. For example, the attribute may indicate 60% of the characteristic in case the characteristic being a character (e.g. a characteristic can be "List Contact" while attribute has only represents "Action Contact"). The representation metamodel may be selected for example when all metrics indicate degrees higher than a predetermined degree threshold.

According to one embodiment, the representation metamodel comprises a linked data structure representing a hierarchy of characteristics of the first mobile application, the linked data structure comprising nodes representing the characteristics, each node of the nodes being associated with a semantic ID indicative of a characteristic of the first mobile application.

According to one embodiment, selecting the representation metamodel comprises: for each characteristic of at least part of the characteristics, traversing the linked data structure and determining a corresponding characteristic in the linked data structure; wherein selecting is performed based on the number of characteristics of the of at least part of the characteristics having corresponding characteristics in the linked data structure.

For example, if the number of the characteristics of the of at least part of the characteristics having corresponding characteristics (i.e. number of matches) is higher that a predefined minimum match threshold value the representation model is selected.

According to one embodiment, the representation metamodel comprises an XML schema representing the characteristics of the mobile application wherein the XML schema is stored as an XML file in a server connected to the first mobile telecommunication device via a digital telecommunication network.

According to one embodiment, transforming the first application metadata comprises determining attributes of the set of attributes that map to at least part of the characteristics of the first mobile application; instantiating the determined attributes using the at least part of the characteristics of the first mobile application.

According to one embodiment, the first private characteristics comprise:
- inter and intra software dependencies of the first mobile application;
- one or more internal processing tasks to be executed by the first mobile application;
- a set of instructions for installing the first mobile application in a given system;
   wherein the first extended characteristics comprise:
- one or more external processing tasks to be executed by a mobile application to be integrated with the first mobile application;
   wherein each processing task of the one or more internal and external processing tasks comprises a list of processes, a list of data and a list of services used by the processing task.

The inter software dependencies are software components of the first mobile application that interact with each other when the first mobile application is processed.

The intra software dependencies are external software components e.g. of other mobile application, service or library that interact with at least one software component of the first mobile application when the first mobile application is processed.

The set of instructions may be used to install the first mobile application in a mobile telecommunication device running with any one of the OS systems e.g. iOS, Android etc. and also having different software/hardware configurations.

According to one embodiment, the second private characteristics comprise: second inter and intra software dependencies of the second mobile application; one or more second internal processing tasks to be executed by the second mobile application; a second set of instructions for installing the second mobile application in a given system; wherein the second extended characteristics comprise: one or more second external processing tasks to be executed by a mobile application to be integrated with the second mobile application;
wherein each processing task of the one or more second internal and external processing tasks comprises a list of processes, a list of data and a list of services used by the processing task.

According to one embodiment, the method further comprises
- assigning to each data of the list of data a data attribute that describes semantics of the data;
- assigning to each process of the list of processes a process attribute that describes semantics of the process;
- assigning to each service of the list of services a service attribute that describe semantics of the service;
wherein each of the data, process and service attributes is associated with a unique semantic ID.

According to one embodiment, the mapping of at least part of the characteristics of the first mobile application with the set of attributes is performed using at least one of the data, process and service attributes.

In another aspect, the invention relates to a computer program product comprising computer executable instructions to perform the method steps of the method of any one of the preceding embodiments.

In another aspect, the invention relates to a mobile telecommunication device comprising a first mobile application; wherein a set of representation metamodels for mobile applications, wherein a representation metamodel of the set of representation metamodels comprises a set of attributes defining semantics of the characteristics of a given mobile application are provided. The mobile telecommunication device comprises:
- a metadata manager configured for determining first application metadata of the first mobile application, the first application metadata describing characteristics of the first mobile application;
- a metamodel selector configured for selecting using the first application metadata and the set of attributes a representation metamodel of the set of representation metamodels for representing the characteristics of the first mobile application;
- transformation engine configured for transforming the first application metadata into a first application-specific metamodel instance of the selected representation metamodel; and
- an integration engine configured for integrating the first mobile application with a second mobile application using the first application-specific metamodel instance, thereby enhancing the functionality of the first mobile application with the functionality of the second mobile application.

According to one general aspect, a system may include recorded on a non-transitory computer readable storage medium and executable by at least one processor. The system may include a metamodel selector configured to cause the at least one processor to determine a semantic metamodel for at least two software applications, the semantic metamodel including a description of semantics, processes, and data that are applicable to the at least two software applications. The system may include a metadata manager configured to cause the at least one processor to determine application metadata describing an application of the at least two applications. The system may include a transformation engine configured to cause the at least one processor to transform the application metadata into an application-specific metamodel instance of the semantic metamodel. The system may include an integration engine configured to cause the at least one processor to integrate the at least two software applications, based on the application-specific metamodel instance.

According to another general aspect, a computer-implemented method for causing at least one processor to execute instructions recorded on a computer-readable storage medium may include determining a semantic metamodel for at least two software applications, the semantic metamodel including a description of semantics, processes, and data that are applicable to the at least two software applications. The method may include determining application metadata describing an application of the at least two applications, transforming the application metadata into an application-specific metamodel instance of the semantic metamodel, and integrating the at least two software applications, based on the application-specific metamodel instance.

A computer program product may be tangibly embodied on a non-transitory computer-readable medium and may comprise instructions that, when executed, are configured to cause at least one processor to determine a semantic metamodel for at least two software applications, the semantic metamodel including a description of semantics, processes, and data that are applicable to the at least two software applications. The instructions, when executed, may be further configured to determine application metadata describing an application of the at least two applications, transform the application metadata into an application-specific metamodel instance of the semantic metamodel, and integrate the at least two software applications, based on the application-specific metamodel instance.

According to one embodiment, the metamodel selector is further configured to search a metamodel repository storing a plurality of semantic metamodels to select the semantic metamodel therefrom.

According to one embodiment, the metamodel selector includes a feature selector configured to select portions of the application metadata for use in selecting the semantic metamodel from the plurality of semantic metamodels.

According to one embodiment, the metadata manager is configured to provide the application metadata based on an analysis of the application.

According to one embodiment, the transformation engine includes:
a semantic mapper configured to perform a mapping of semantics of the application metadata using the semantics description of the semantic metamodel and for inclusion within the application-specific metamodel;
a process mapper configured to perform a mapping of processes described in the application metadata using the processes description of the semantic metamodel and for inclusion within the application-specific metamodel; and
a data mapper configured to perform a mapping of data described in the application metadata using the data description of the semantic metamodel and for inclusion within the application-specific metamodel.

According to one embodiment, the integration engine is configured to integrate the at least two software applications, using a second application-specific metamodel instance of a second application of the at least two applications, wherein the second application-specific metamodel instance is created using the semantic metamodel.

According to one embodiment, the semantic metamodel defines features applicable to the at least two software applications, and the application-specific metamodel instance includes instantiations of a subset of the defined features that are provided by the application.

According to one embodiment, the semantic metamodel defines needs applicable to the at least two software applications, and the application-specific metamodel instance includes instantiations of a subset of the defined needs that are requested by the application for fulfillment thereof by at least a second application of the at least two applications.

According to one embodiment, a repository is configured to store a plurality of application-specific metamodel instances corresponding to a plurality of applications, including the at least two applications, and further comprising an application matcher configured to match needs of the application with features of at least one of the stored application-specific metamodel instances, for fulfillment therewith.

According to one embodiment, the application matcher is further configured to perform a search of the stored application-specific metamodel instances in the repository that are instantiated from the semantic metamodel, based on the needs of the application.
The details of one or more implementations are set forth in the accompanying drawings and the description below. Other features will be apparent from the description and drawings, and from the claims.

### BRIEF DESCRIPTION OF THE DRAWINGS

FIG. 1 is a block diagram of a system for application discovery and integration using a semantic metamodel.
FIG. 2A is a block diagram of a discovery process of the system of FIG. 1.
FIG. 2B is a block diagram of an integration process of the system of FIG. 1.
FIG. 3 is a flowchart illustrating example operations of the system of FIG. 1.
FIG. 4 is a diagram of an example semantic metamodel used in the system of FIG. 1.
FIG. 5 is a more detailed example of the metamodel of FIG. 4.
FIG. 6 is a more detailed example of the metamodel of FIG. 5.
FIG. 7 is a more detailed example of usage semantics included in the metamodels of FIGS. 5 and 6.
FIG. 8 is a more detailed example of a process list used in the metamodels of FIGS. 5 and 6.
FIG. 9 is a more detailed example of a data list used in the metamodels of FIGS. 5 and 6.
FIG. 10 is a more detailed example of a service list used in the example metamodels of FIGS. 5 and 6.
FIG. 11A-B is a diagram of an example of an application-specific metamodel instance created using the metamodels of FIGS. 4-10 in the system of FIG. 1. (In the following a reference to FIG.11 is a reference to FIG.11A-B)

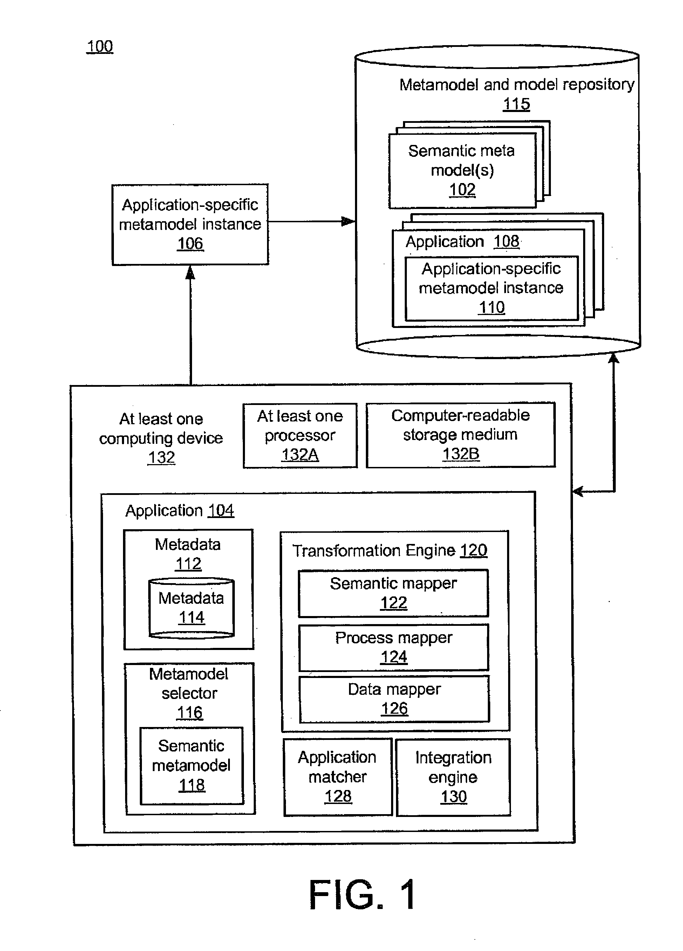

FIG. 1 is a block diagram of a system 100 for application discovery and integration using semantic metamodels. In the example of FIG 1, one or more semantic metamodels 102 may be utilized by an application 104 to create an application-specific metamodel instance 106 therefrom. Thereafter, the application 104 may be integrated for use with a second application 108, which itself may be associated with a corresponding application-specific metamodel instance 110. In other words, by creating the application-specific metamodel instances 106, 108 from the same, common underlying semantic metamodel 102, the applications 104, 108 may be easily integrated with one another, with little or no human involvement in the integration process, and in a manner that is generally more convenient, fast, cost effective, and efficient than existing integration techniques.

Thus, in the system 100, one or more of the semantic metamodels 102 provide the application 104 with an ability to describe itself in a generic, common, high level language, where the resulting description is represented in FIG. 1 as the application-specific metamodel instance 106. In other words, rather than focusing on specific details of an individual integration between two specified applications, and explicitly mapping semantics and data from one such application to the other, the semantic metamodel 102 enables the application 104 to generate its self-describing application-specific metamodel instance 106, independently of any specific integration with any other software application. For example, as described in more detail below, it may occur that the application 108 may not even exist at a time that the application-specific metamodel instance 106 is created.

Nonetheless, once the application 108 is created, discovered, or otherwise identified or determined for integration with the application 104, the semantic metamodels 102 (i.e., an appropriate semantic metamodel selected therefrom, as described below) provide for a generic, high level language for describing systems, data structures, and functionalities of each of the applications 104, 108, without affecting the underlying, actual low level implementations of these things in each application 104, 108, which may themselves therefore continue to function in system-specific, e.g., proprietary, ways.

In the example of FIG.1, the application 104, and the application 108, should be understood to conceptually represent virtually any software application. As such, either or both of the applications 104, 108 should be understood to execute, e.g., locally, or in a secure environment behind a firewall, over a public network, or in any other suitable execution environment. In many of the examples that follow, the applications 104, 108 are described as software applications, such as may be operated by a company, enterprise, or other entity. However, again, it may be appreciated that such examples are non-limiting, and that the applications 104, 108 also may represent many other types of software applications, such as, e.g., educational applications, government applications, charitable or other non-profit applications, or applications designed for personal use by a user.

Whatever a nature of type of the application 104, FIG. 1 illustrates that a metadata manager 112 may be utilized to manage associated application metadata 114 which describes aspects, features, and functions of the application 104. For example, the metadata 114 may describe a type and location of associated data, e.g., master data or configuration data, used by the application 104. The metadata 114 also may describe various processes executed by the application 104, e.g., processes for manipulating the above-referenced data and/or external data. In some cases, the metadata 114 may relate such processes to relevant use cases and descriptions thereof. For example, in the case of control applications, the metadata 114 may describe the application 104 in the context of various, relevant control processes and associated use cases.

In some cases, the metadata 114 may simply be provided in conjunction with the application, e.g., by a creator or publisher thereof, in which case the metadata manager 112 may be responsible simply for storing/accessing the metadata 114. In other scenarios, the metadata manager 112 may be responsible for generating the metadata 114 automatically, e.g., based on an analysis of underlying application code of the application 104. In still other examples, the metadata manager 112 may be configured to interact with a user of the application 104 to create the metadata 114, even long after an original creation or publication of the application 104.

As referenced above, it may occur that one or more semantic metamodels 102 are available for use with or by the application 104. Accordingly, the application 104 is illustrated as including a metamodel selector 116, which may be configured to select a particular semantic metamodel 118 from the one or more semantic metamodels 102 for creation of the application-specific metamodel instance 106. Consequently, as described in more detail below, it may be appreciated that the application 108 should be understood to utilize some or all of the same semantic metamodel 118 in creating its associated, application-specific metamodel instance 110.

Thus, in some examples, it may occur that, of the available semantic metamodels 102, only one (i.e., the semantic metamodel 118) is available or compatible for use with the application 104. In other scenarios, it may occur that two or more of the semantic metamodels 102 could be used with the application 104, but that the application 104 may choose from among the available subset of the semantic metamodels 102, based on a desired nature and type of integration (e.g., based on a type of integration and associated semantic metamodel relevant to a type or class of application, or to the application 108 itself, if known at the time).

In practice, the metamodel selector 116 may operate by selecting or otherwise identifying one or more features or use cases contained within the metadata 114, for comparison thereof against the semantic metamodels 102. For example, such features may be pre-determined by the user of the application 104, or may be dynamically selected by the metamodel selector 116, based, e.g., on other aspects of the application 104. Then, by comparing the thus-identified features of the application 104 from the metadata 114 to corresponding aspects of the semantic metamodels 102, the metamodel selector 116 may identify the semantic metamodel 118 to be used in obtaining the application-specific metamodel instance 106.

In the example of FIG. 1, the semantic metamodels 102 are illustrated as being stored within a metamodel and model repository 115. As described in detail below, the repository 115 provides a central, available, searchable location, which thus facilitates, e.g., operations of the metamodel selector 116 in selecting the semantic metamodel 118. For example, in scenarios in which the system 100 is implemented in the context of a specific system, the repository 115 may be implemented within an associated on-premises IT environment. In other example implementations, however, as described in detail below, the repository 115 may be implemented in Cloud-based scenarios, in which the repository 115 is publicly available to all users of the application 104.
In specific examples, the semantic metamodels 102, including the semantic metamodel 118, may be implemented as XML (extensible markup language) schemas. In general, as is known, such a schema describes allowable structures and contents of XML documents that are compatible therewith. Accordingly, a transformation engine 120 may be configured to utilize the semantic metamodel 118 together with the metadata 114, to thereby provide the application-specific metamodel instance 106 as an XML document. As such, and in example implementations, the application-specific metamodel instance 106, as well as the application-specific metamodel instance 110, may be created, stored, and utilized using well-known techniques for searching for and manipulating XML documents. Nonetheless, it may appreciated that various other types of current or future schemas may be utilized to implement the semantic metamodels 102.

In the example of FIG. 1, the transformation engine 120 executes several different types of mappings in order to instantiate the semantic metamodel 118 using the metadata 114, to thereby obtain the application-specific metamodel instance 106. For example, the transformation engine 120 is illustrated as including a semantic mapper 122, which may be operable to transform individual or combinations of terms and/or concepts within the metadata 114 into corresponding terms/concepts, using language consistent with the semantic metamodel 118.

Detailed examples of such semantic mappings are provided in detail below, but, for the sake of illustration, it may occur that the application 104 is a software application related to obtaining a request for proposal (RFP), which uses the term "winning bid" obtained from a "vendor." At the same time, the semantic metamodel 118 may include a portion that relates to such RFPs, in which the semantic mapper 122 determines that a "supplier" is equivalent to a "vendor," and a "winning bid" contains final value information for a "line item" of an "outline agreement" defined in the semantic metamodel 118. As may be appreciated with respect to the simplified example, the application 108 may utilize a term such as "seller" or "provider," yet the application-specific metamodel instance 110 associated therewith may similarly refer to such entities as "supplier," thereby providing the above-referenced common framework for referring to a given concept during a subsequent integration of the applications 104, 108.

Somewhat similarly, a process mapper 124 may map processes described in the metadata 114 to processes specified within the semantic metamodel 118. In this regard, it may be appreciated that a single process of the metadata 114 may correspond to two or more processes of the semantic metamodel 118, or, conversely, multiple processes of the metadata 114 may refer to a single process of the semantic metamodel 118. In still other example scenarios, a given number of a plurality of processes of the metadata 114 may correspond to a same or different number of processes specified in the context of the semantic metamodel 118. For example, it may occur that the metadata 114 describes a series of process steps, but that the semantic metamodel 118 only needs to specify a first and last step of the series of process steps in order to facilitate desired integrations of the application 104 with other applications, such as the application 108. For example, in a pricing processing task, the metadata 114 may specify various rounds of value exchanges for lowering an initially provided value. Meanwhile, the semantic metamodel 118 may only require the fact that a value was requested and ultimately obtained for purposes of specifying the application-specific metamodel instance 106.

Finally with respect to the transformation engine 120 of the example of FIG. 1, the data mapper 126 may be configured to relate data types and specific data instances of the metadata 114 to the semantic metamodel 118. For example, as referenced above, the data mapper 126 may seek to relate master data or configuration data of the application 104 to corresponding types of data within the semantic metamodel 118.

The data mapper 126 may also be responsible for mapping individual data fields of data of the application 104 to corresponding data fields within the application-specific metamodel instance 106. In this regard, it may be appreciated that, although examples of mapping data from one field to another are, by themselves, well known, the data mapper 126 of FIG. 1 provides for specific functionalities which enable these and other types of data mapping in the context of the semantic metamodel 118, to thereby facilitate a desired integration of the application 104 in a manner that is partially or completely automated, and therefore generally more efficient and cost effective than existing techniques which require varying extents of manual identification of data fields to be mapped.

As referenced above, the repository 115 may serve as a central point of discovery, identification, and selection of one or more of the semantic metamodels 102 by the metamodel selector 116. Similarly, an application matcher 128 may be utilized to discover, select, and utilize the application 108, and/or other applications, for integration with the application 104. In other words, the repository 115 may be used to register a plurality of applications, such as the application 108, providing various features and functions which may be desirable to use in conjunction with operations of the application 104. In practice, all such applications may be stored or referenced in conjunction with corresponding application-specific metamodel instances, so that, upon discovery/identification and selection thereof, any such application may be immediately available for integration with the application 104, utilizing the various techniques described above, and in conjunction with operations of an integration engine 130, described in more detail below.

For example, in a highly simplified example, it may occur that a user of the application 104 has specific knowledge of the individual application 108, and may desire integration of the application 104 therewith. In such scenarios, the user of the application 104 may utilize the application matcher 128 simply to identify the application 108 within a repository 115, perhaps simply by identifying the application 108 using an appropriate unique identifier or name. Thereafter, integration of the applications 104, 108 may proceed as described herein.
In other example implementations, however, the user of the application 104 may not have such specific knowledge. Rather, the user may simply have an idea of a desired (type of) functionality to be implemented by, or in conjunction with, operations of the application 104. In such cases, the application matcher 128 may be utilized to perform a search of applications stored in association with the repository 115, in order to match available applications and their associated functionalities with the desired functionalities to be included in an integration with the application 104.

For example, the application matcher 128 may be configured to search the applications of the repository 115 based on their corresponding names or other descriptions or metadata associated therewith, in order to ascertain a likelihood of desired functionality being provided thereby. Further, the application matcher 128 may restrict such searches to those applications which are associated with application-specific metamodel instances derived from the same semantic metamodel 118 utilized by the application 104 to generate the application-specific metamodel instance 106, in order to ensure compatibility between applications identified by the application matcher 128 and the application 104.
In more specific example implementations, the application-specific metamodel instance 106 may be provided with what is referred to herein as a bill of needs, which is designed to specify one or more functionalities that may be associated with the application 104, i.e., that may be provided one of the applications 108 for access thereto by integration of the application with the application 104.

As referenced above, and described in more detail below, the application-specific metamodel instance 106 may include various requirements of the application 104, as translated from the metadata 114 by the transformation engine 120, which specify functionalities and points of integration. Therefore, similarly, and as also explained in detail below, the bill of needs may be expressed using the same or substantially the same techniques as used in expressing such application features. In other words, the application features specify what the application 104 does, while the bill of needs specifies what the application 104 would like to have done by another application, which would presumably express its abilities in this regard in the context of its own application features included within its own application-specific metamodel instance.
Thus, the application matcher 128 may proceed by matching some or all of a bill of needs of the application-specific metamodel instance 106 with matching application features of the application-specific metamodel instance 110, and thereafter executing integration of the applications 104, 108 using the relevant portions of the application features and bill of needs of the application-specific metamodel instance 106 on the one hand, and the application features of the application-specific metamodel instance 110 on the other hand.

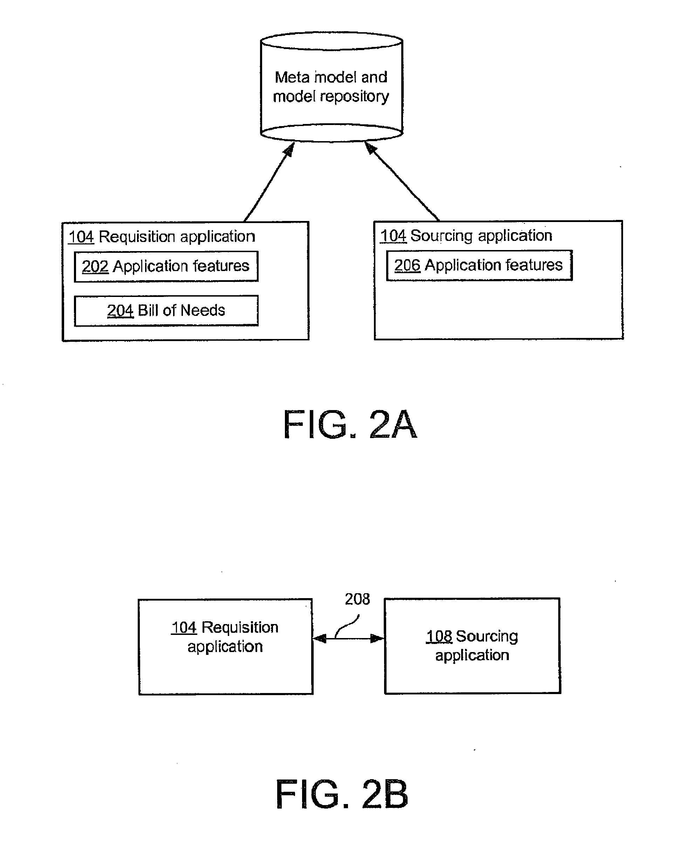

By way of more specific examples, with reference to FIG. 2A, a discovery process that may be executed by the application matcher 128 is illustrated, in which the application 104 is illustrated as a requisition application which accesses the metamodel and model repository 115 to discover the application 108 as a sourcing application for integration therewith. In the example, as referenced above, the application-specific metamodel instance 106 may include both application features 202 and bill of needs 204 associated with the requisition application 104.

As described, the format and structure of the application features 202 and 204 may be identical or substantially identical, although the application features 202 specify capabilities and characteristics of the requisition application 104, while the bill of needs 204 express one or more desired capabilities and characteristics which are sought in the context of a sourcing application, such as the sourcing application 108. Meanwhile, the sourcing application 108 is illustrated as being associated with application features 206 of its own application-specific metamodel instance 110. As may be appreciated, the application features 206 may include a format and structure that matches both the application features 202 and bill of needs 204 of the application-specific metamodel instance 106, all of which are in accordance with the common semantic metamodel 118.

By way of specific, non-limiting example, it may occur that the requisition application 104 corresponds to a Cloud-based human resources system, which may wish to make use of a Cloud survey tool to support employee performance reviews. Meanwhile, the sourcing application 108 may represent one of perhaps a plurality of such survey tools. In operation, an owner or other provider of the survey tool 108 may wish to make such a survey tool publicly available for use in conjunction with the repository 115. In this regard, such a provider may publish or otherwise register the survey tool 108 in the repository 115. For example, rather than storing the survey tool 108 itself in conjunction with the repository 115, the provider may simply register a reference to the survey tool 108, in conjunction with registration of the corresponding application-specific metamodel instance 110, which itself may be made available for search and discovery within the repository 115.

It may be further appreciated that the applications 104, 108 may be developed completely independently of one another, and at different times. For example, the requisition application 104, e.g., the human resources application referenced above, may be developed before the sourcing application, e.g., the survey tool 108, even exists. Nonetheless, a developer or other provider of the human resources application 104 may recognize a potential need for such a survey tool, and may provide specifics of such a need within the bill of needs 204.
Thus, at some later time, an administrator or other user of the human resources application 104 may in fact wish to utilize the functionality of such a survey tool, and may be provided with an administrative dashboard or other user interface in the context of the human resources application 104, in which each general feature specified by the bill of needs 204, including the referenced survey tool, may be paired with a list of available services of the repository 115 and may be used to support the specified feature.

Then, the administrator may simply need to select a subscribe button or other appropriate interface element in order to initiate integration of the applications 104, 108 and thereby activate the desired functionality. Thereafter, for example, new buttons (or other UI artifacts) may be provided or enabled within the human resources application 104, in order to provide for launching an operation of the survey tool 108. In this way, the administrator of the human resources application 104 may identify and select the survey tool 108 as providing desired functionality, even if the survey tool 108 did not exist, and/or was developed wholly independently of, the human resources application 104. Moreover, it may be appreciated that the administrator may similarly update the desired survey functionality, using a different survey tool than the survey tool 108, if desired and if/when such a preferred survey tool becomes available within the repository 115.

FIG. 2B illustrates an integration of the requisition application 104 and the sourcing application 108, as conceptually illustrated by arrow 208. For example, the integration engine 130 of FIG.1 may be utilized to leverage the application-specific metamodel instances 106, 110, in order to automatically integrate the applications 104, 108 at a suitable or desired manner.

For example, the integration engine 130 may implement a mediated integration, in which the integration engine 130 or other suitable component serves as a central point of interaction between inputs and outputs of the applications 104, 108. In other example implementations, the integration 208 may be direct, so that the outputs of each application 104, 108 are suitably provided as direct inputs to the other of the applications 104, 108 as inputs thereof. In these and other examples, it may be appreciated that the various inputs/outputs of the applications 104, 108 are commonly specified and described through the use of the corresponding application-specific metamodel instances 106, 110.

With reference back to FIG. 1, application 104 is illustrated as being executed using at least one computing device 132, which itself includes at least one processor 132A and computer readable storage medium 132B. That is, for example, instructions for execution of the application 104 may be stored using the computer readable storage medium 132B, and may be executed by the at least one processor 132A in order to obtain various features and functions described herein.

For example, the at least one processor 132A may represent multiple processors executed in parallel. Meanwhile, the computer readable storage medium 132B may be utilized to store data of the application 104, such as master data or configuration data, or the metadata 114, as well as the actual instructions for execution of the application 104. Of course, the at least once computing device 132 may include, or be associated with, various peripheral components (e.g., human interface devices for displays), various power components, and various network or other communication interfaces, none of which are specifically illustrated in the example of FIG.1, for the sake of simplicity and clarity.

Similarly, the at least one computing device 132 is represented generically in FIG. 1 for the sake of simplicity, but may be understood to represent any appropriate computing device, such as, e.g., a desktop computer, a computer of a computing cluster, or any appropriate mobile computing device (e.g., a laptop, notebook, netbook, tablet, or Smartphone). Further, in as much as the at least one computing device 132 may represent two or more computing devices in communication with one another, it may be appreciated that some or all of the functionalities described with respect to the application 104 may be implemented on a first such computing device, while remaining operations may be executed on the one or more computing devices and communications therewith.

For example, in particular, it may be appreciated that any of the various components 112-130 illustrated as executing in conjunction with the application 104 may be, in fact, executed separately from the application 104, e.g., using a separate computing device and/or a separate application or other hardware/software platform. In particular, for example, it may occur that the metamodel selector 116, the transformation engine 120, the application matcher 128 and/or the integration engine 130 may individually or collectively be executed outside of, and in communication with, the application 104. For example, these components may be operated as a middleware between the application 104 and the repository 115. Similarly, it may occur that these components are provided in conjunction with the repository 115 itself, using an appropriate Cloud-based hardware/software platform. Similarly, the metadata manager 112 may also be implemented separately from the application 104, such as in scenarios in which the application 104 is not initially provided with appropriate metadata 114.

Thus, from the above description, it should be apparent that, in various example scenarios, the application 104 may simply be an otherwise-conventional application, which may be registered with the repository 115 by an owner or other provider thereof. Thereafter, a provider of the repository 115 may utilize the various components 112-130 to generate the application-specific metamodel instance 106 for association with the application 104 within the repository 115, to thereby make the application 104 publicly available for integration with other applications utilizing the same semantic metamodel (e.g., 118) of the semantic metamodels 102. Such examples may be suitable for scenarios in which providers of the application 104 are unwilling or unable to generate the corresponding application-specific metamodel instance 106.

In other example scenarios, however, it may occur that the semantic metamodels 102, including the semantic metamodel 118, represent a known standard for commonly expressing features and needs of applications. In such scenarios, providers of such applications as the application 104 may desire to obtain the benefits of such a standard representation, and may adopt use of a corresponding, appropriate semantic metamodel in order to generate the application-specific metamodel instance 106 for registration in conjunction with the application 104 within the repository 115. Of course, similar comments and scenarios may apply to the application 108 and its corresponding application-specific metamodel instance 110, and to all such applications and associated metamodel instances registered in the context of the repository 115.

Thus, an aggregate and over time, the repository 115 may come to represent a large store of available applications which may be easily, e.g., automatically, integrated with one another in desired fashions, to thereby provide developers and other application users with desired functionalities in a cost-effective and efficient manner. Moreover, such advantages may be obtained even though the various application-specific metamodel instances are developed independently, in conjunction with their underlying applications, and without requiring knowledge of, or even existence of, the other applications which may be integrated therewith at some future point in time. Thus, the developers and other users of the various applications may each be provided with a large number and variety of potentially desirable applications and associated features, as well as with the ability to utilize such applications and associated features in a convenient manner.

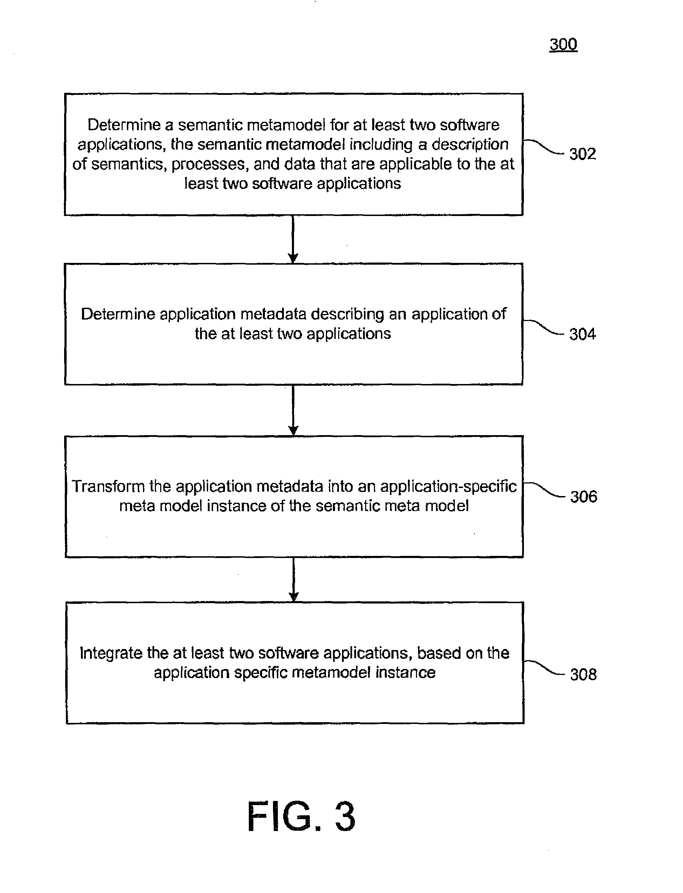

FIG. 3 is a flowchart 300 illustrating example operations of the system 100 of FIG. 1. In the example of FIG. 3, operations 302-308 are illustrated as separate, sequential operations. However, it may be appreciated that, in various implementations, any two or more of the operations 302-308 may be implemented in a partially or completely overlapping or parallel manner, or in a nested, iterative, or looped fashion. Further, additional or alternative operations may be included, and, in various implementations, one or more of the operations 302-308 may be omitted.

In the example of FIG. 3, a semantic metamodel may be determined for at least two software applications, the semantic metamodel including a description of semantics, processes, and data that are applicable to the at least two software applications (302). For example, the metamodel selector 116 of FIG. 1 may select the semantic metamodel 118 from the available semantic metamodels 102 of the metamodel and model repository 115. In some examples, only a single semantic metamodel may be applicable or compatible with a given software application, such as the application 104, so that metamodel selection per se need not be performed in every scenario. Further, as referenced above, it is not necessary to know of an existence, much less a particular identity, of both of the at least two software applications in order to utilize the selected semantic model with respect to a software application. Rather, the operation 302 merely requires that the referenced semantic metamodel provides the referenced description in a manner that is applicable to the at least two software applications, and, as described in detail herein, provides each of the at least two software applications with an ability to describe itself for current or future integration with the other application.

Application metadata describing an application of the at least two applications may be determined (304). For example, the metadata manager 112 of FIG. 1 may determine the metadata 114 of the application 104. As described, the metadata 114 may be currently available and stored in association with the application 104, and/or may be partially or completely generated for the application 104 by the metadata manager 112. As described, the metadata 114 may generally describe various features, aspects, or requirements of the application 104, in a manner that is generally application or assistant-specific, so that such applications may be provided with corresponding metadata in a manner that is suitable for (e.g., proprietary to) the given application and/or underlying platform.

The application metadata may be transformed into an application-specific metamodel instance of the semantic metamodel (306). For example, the transformation engine 120 may transform the metadata 114, using the semantic metamodel 118, to obtain the application-specific metamodel instance 106. In this way, the application in question, e.g., the application 104, may describe itself for current or future integrations.

Thus, the at least two software applications may be integrated, based on the application-specific metamodel instance (308). For example, the integration engine 130 may be configured to utilize integration points (e.g., input/output interfaces) identified by the application-specific metamodel instance 106 with respect to the application 104, in order to integrate the application 104 with the application 108.
Thus, FIG. 3 may be understood to represent a high-level operational flow of example, basic operations of the system 100 of FIG. 1. As referenced above with respect to FIG. 3, various additional or alternative operations may be included, many of which may be understood or appreciated from the above description of FIGS. 1, 2A, 2B.

For example, although not specifically recited in FIG. 3, the second of the at least two software applications may generally also be associated with a corresponding application-specific metamodel instance (e.g., the application-specific metamodel instance 110 associated with the application 108), so that the integration engine 130 may utilize both such instances to implement the integration of the applications 104, 108.

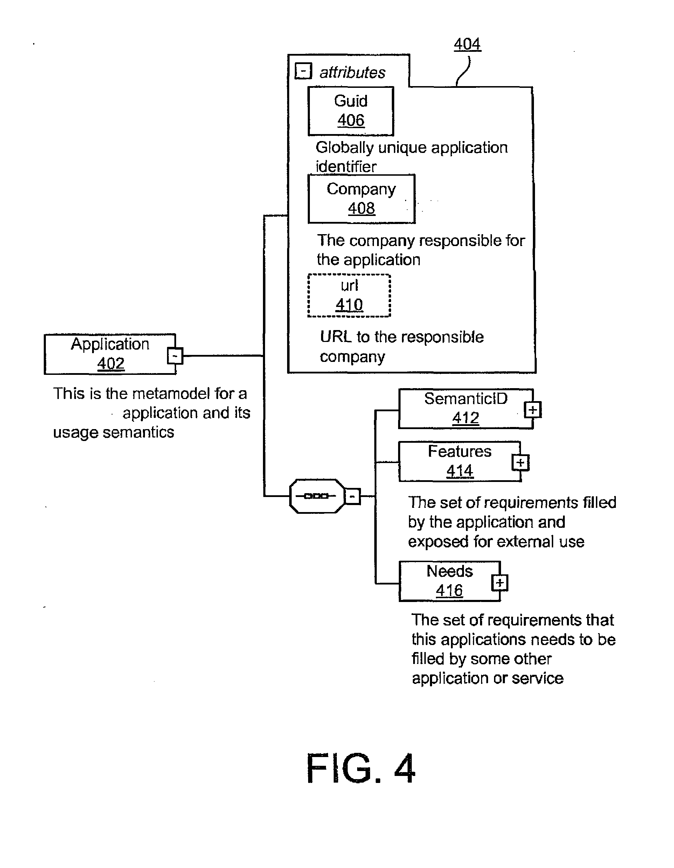

Similarly, FIG. 3 does not explicitly mention the use of the bill of needs referenced above, e.g., with respect to FIG. 2A, and associated matchings thereof between the bill of needs 204 of the requisition application 104 and corresponding application features 206 of the sourcing application 108. Nonetheless, again, it may be appreciated that any and all such additional or alternative operations may be included in an appropriate or desired manner in the context of the overall operational flow of the flowchart 300 of FIG. 3. Many such additional or alternative features and associated operations are described below with respect to the specific examples of FIGS. 4-11.
FIG. 4 is a diagram 400 of a metamodel to be utilized in conjunction with a software application and its associated usage semantics. For example, such a metamodel may represent, e.g., the semantic metamodel 118 of FIG. 1. In the example of FIG. 4, an application 402 is described by corresponding attributes 404. In the example, as shown, the attributes 404 may include a globally unique identifier (GUID) 406, which will uniquely identify an underlying application used to instantiate the metamodel of FIG. 4. In other words, a result of instantiating the metamodel of FIG. 4 would be, e.g., the application-specific metamodel instance 106, so that the GUID 406 would assist in relating the resulting metamodel instance to the specific application in question.

Further within the attributes 404, a company 408 that is responsible for the application in question may be identified. Similarly, a uniform resource locator (URL) 410 may be included, which identifies the responsible company 408 through the use of a URL link, e.g., to the company website or relevant portion thereof.

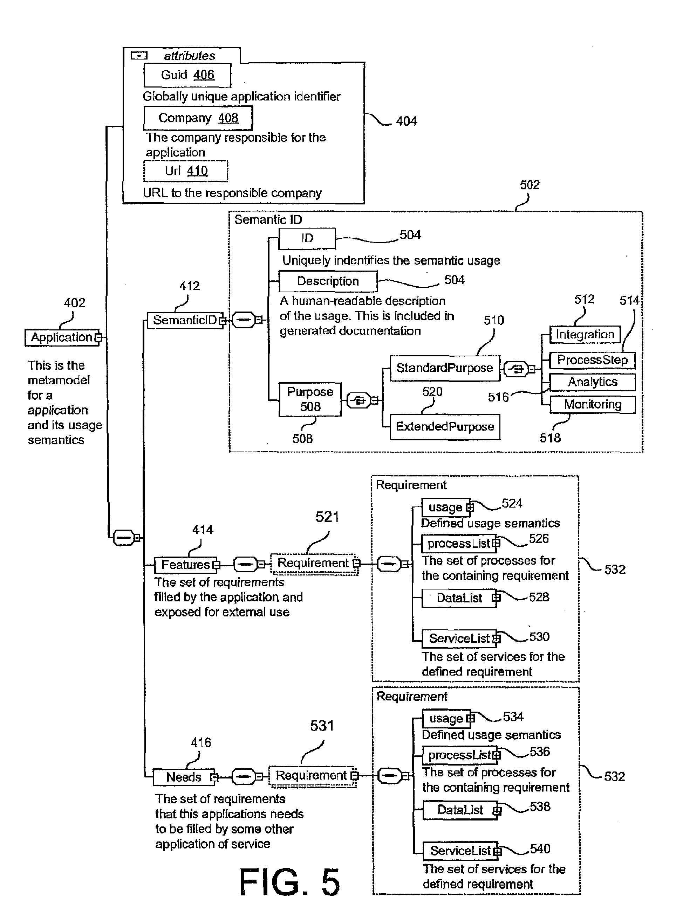

Further in FIG. 4, a semantic ID 412 is included, which generally represents information relating to a description, purpose, and context of the application 402. More detailed examples of the semantic ID 412 are provided below, e.g., with respect to FIG. 5.

Also in FIG 4, features 414 refer to a set of requirements filled by the application 402 and exposed for external use. In other words, the features 414 corresponds generally to the application features 202 of FIG. 2A. Similarly, needs 416 refer to a set of requirements that the application 402 desires or needs to be filled by some other application or service, in order to provide a corresponding functionality. Thus, the needs 416 responds generally to the bill of needs 204 described above with respect to FIG. 2A.

FIG. 5 is an expanded version of FIG. 4, in which each of the semantic ID 412, features 414, and needs 416 are expanded to provide a more detailed view of each. Specifically, as shown, the semantic ID 412 is associated with a semantic ID structure 502, in which a unique identifier 504 provides identification for a semantic usage of the semantic ID 412. Meanwhile, a description 506 provides a human readable description of the usage semantics, which may be included in corresponding, generated documentation. Further, a purpose 508 is included in the semantic ID structure and includes a machine-readable declaration of the semantic usage.

As shown, the purpose 508 may include a standard purpose 510, referring to a set of predefined purposes for all compatible applications. As further shown, with respect to the standard purposes 510, such purposes may include integration 512, associated process step 514, associated analytics 516, and/or associated monitoring 518. The purpose 508 also may include an extended purpose 520, which may refer, for example, to extensions added by a customer or other consumer or purchaser of a relevant application. Thus, the extended purpose 520 identifies application-specific purpose or semantic usages associated with such customizations.

With regard to the features 414, a plurality of associated requirements 521 may be enumerated, where each requirement 522 may include, for example, usage semantics 524, one or more process lists 526, data list 528, and service list 530. As may be appreciated from the above description of FIG. 1, such lists and related information may correspond with the semantic mapper 122, the process mapper 124, and the data mapper 126 of the transformation engine 120 of FIG. 1.

As shown, the usage 524 may relate generally to define usage semantics for the application 402 and its associated requirements 521. The process list 526 may refer generally to a set of processes for the requirement 522. The data list 528 provides a relevant set of data for the defined requirement 522. Finally, similarly, the service list 530 defines the subset of services for the defined requirement.
As also described above, the needs 416 correspond generally to the type of bill of needs described above, e.g., the bill of needs 204 of FIG 2A. Consequently, in contrast to the features 414 and the requirements 521 which specify set of requirements filled by the application 402 and exposed for external use, the needs 416 and associated requirements 531 provide a set of requirements that the application 402 needs or desires to be filled by some other application or service, e.g., the application 108.

As may be observed, the corresponding requirement structure 532 may correspond substantially or completely identical to the requirement structure 522 associated with the requirement 521 of the features 414. In this way, for example, it may be a straightforward extension for a provider or user of the metamodel of FIG. 4 to add the needs 416 to the metamodel, due to familiarity with the features 414 and associated data requirements 521/522. Moreover, due to such identity between the requirements 521/522 and the needs 416, including requirements 531 and requirement structure 532, it may be straightforward to determine integration points at which the application 402 provides integration points for integration with a second application, which itself, as described with respect to FIG. 2A may utilize requirements 206 which are identical in form and structure to the requirement structures 522,532.

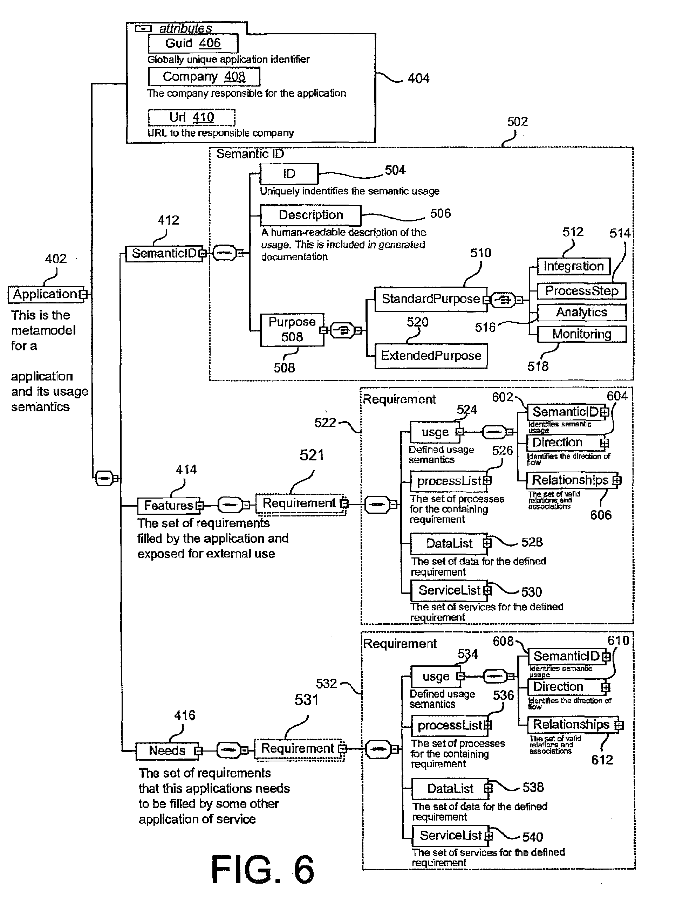

FIG. 6 is a further expanded view of the metamodel of FIG. 5, in which additional detail regarding the usage semantics 524/534 are provided. As illustrated, a given instance of such usage semantics may be associated with its own semantic ID 602 that identifies a semantic usage thereof, as well as a direction 604 that identifies a direction of data flow, and relationships 606 that represent a set of valid relationships and associations between various semantic entities. Further, as may be expected from the similarity between the requirement 522 and the requirement 532, the usage semantic 534 of the requirement 532 also may be associated with a semantic ID 608, direction 610, and relationship 612, which may be similar or the same in structure and form with respect to the semantic ID 602, the direction 604, and the relationship 606. Moreover, the semantic ID 602/608, although not specifically illustrated in FIG. 6, may have a structure and format that is identical or substantially identical to the semantic ID 502, which consequently is not reproduced here in detail.

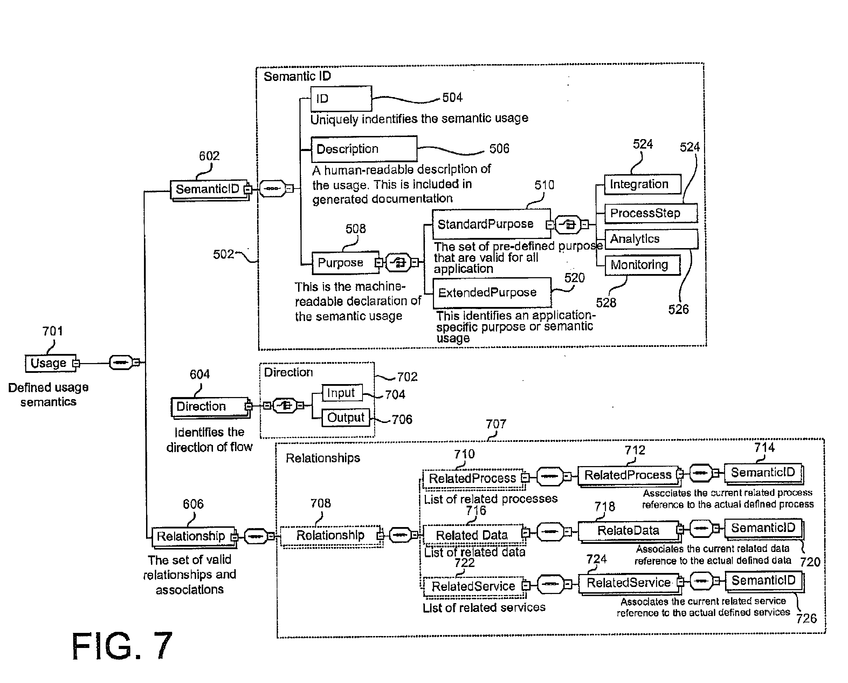

FIGS. 7, 8, 9, 10 provide further detail with respect to the usage semantic 524, the process list 526, the data list 528, and the service list 530, respectively, of the requirement 522. Of course, in this regard, it may be appreciated that the example of FIGS. 7-10 will also be applicable to the identical structures 534, 536, 538, 540 of the requirement 532.

Thus, in the example of FIG. 7, further detail regarding usage semantics 701 are provided. As already described, the usage semantics may include the semantic ID 602, which is shown in expanded form as being identical to the semantic ID 502 of FIG. 5, as referenced above. Meanwhile, the direction 604 is expanded to illustrate an example direction 702, and which input 704 and output 706 directions are identified for corresponding data flows.

Further in FIG. 7, a relationship structure 707 illustrates an example form and format for relationship 708 of the set of valid relationships and associations 606 described above. That is, as shown, the relationship 708 may identify related processes 710 in a corresponding list, which identify the referenced related processes 712 themselves, along with semantic ID 714 that associates a current related process reference to the actual defined process. Again, the semantic ID 714 may correspond in form and format to the semantic ID 502.

Similarly, a list of related data 716 may reference corresponding related data 718, which is associated by virtue of the semantic ID 720. Finally in FIG. 7, and similarly, a list of related services 722 may be associated with a corresponding related service 724 by semantic ID 726.

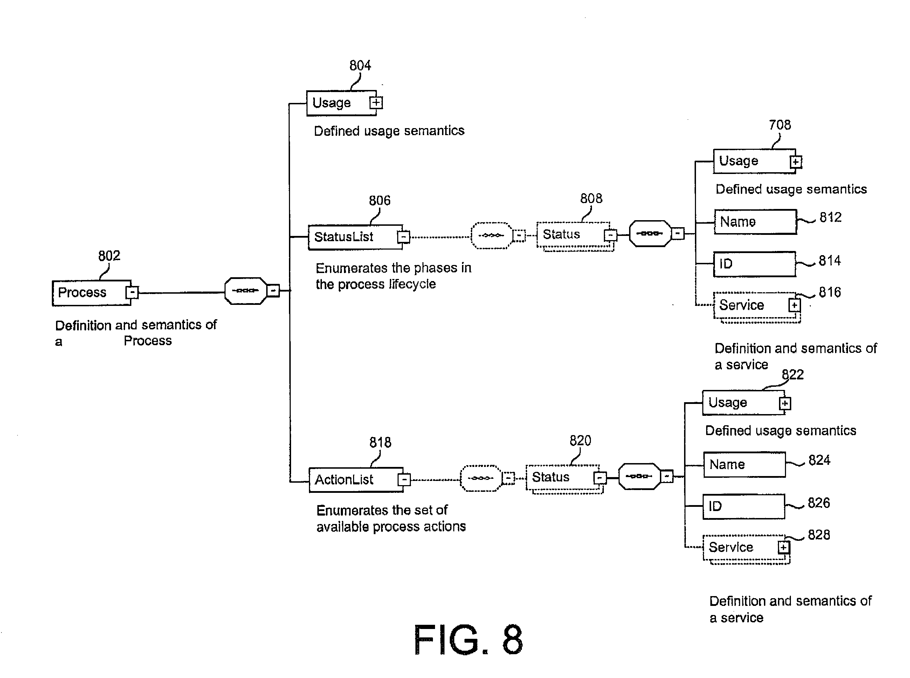

With reference back to, e.g., the requirement 522 of FIGS. 5, 6, the process list 526 may be associated with a process 802 of FIG. 8, which, as illustrated, provides a definition and associated semantics of a particular process. Specifically, as shown, usage semantics 804 may be provided, along with a status list that enumerates various phases in the process life cycle of the process 802.

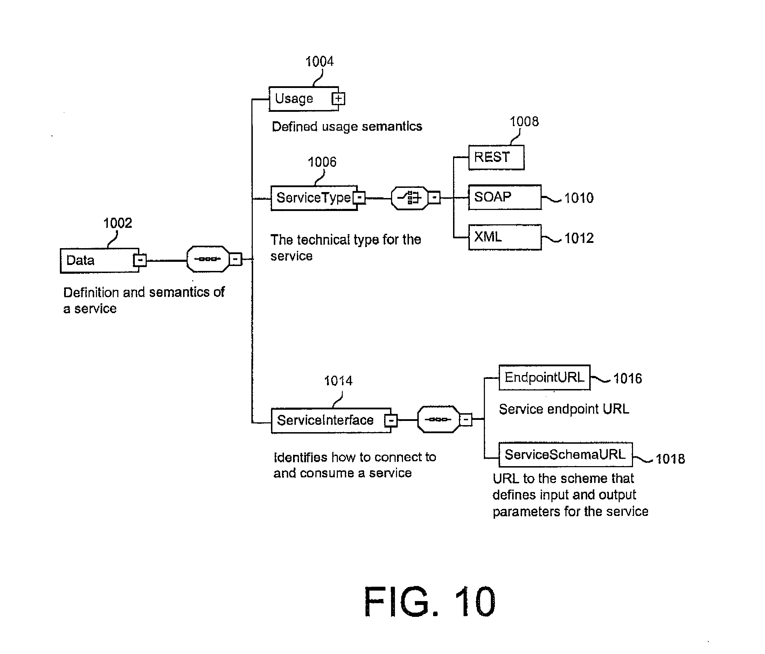

Then, corresponding status information 808 may be provided, utilizing associated usage semantics 810, in conjunction with a process name 812 and ID 814, as well as a service definition 816 providing a definition and semantics of related services. It may be noted that the usage semantics 804 and 810 (as well as 822, described below) may correspond to the usage data structures described above with respect to FIG. 7, in the appropriate context illustrated in FIG. 8. Similarly, the service definition and semantics 816 may correspond to related data structures described below with respect to FIG. 10 (similar comments apply to the service 828, described below).

Further in FIG 8, an action list 818 associated with the process 802 enumerate the set of available process actions, shown in FIG. 8 of actions 820. As referenced, each action 820 may be associated with corresponding defined usage semantics 822, name 824, ID 826 and associated definition/semantic of related services.

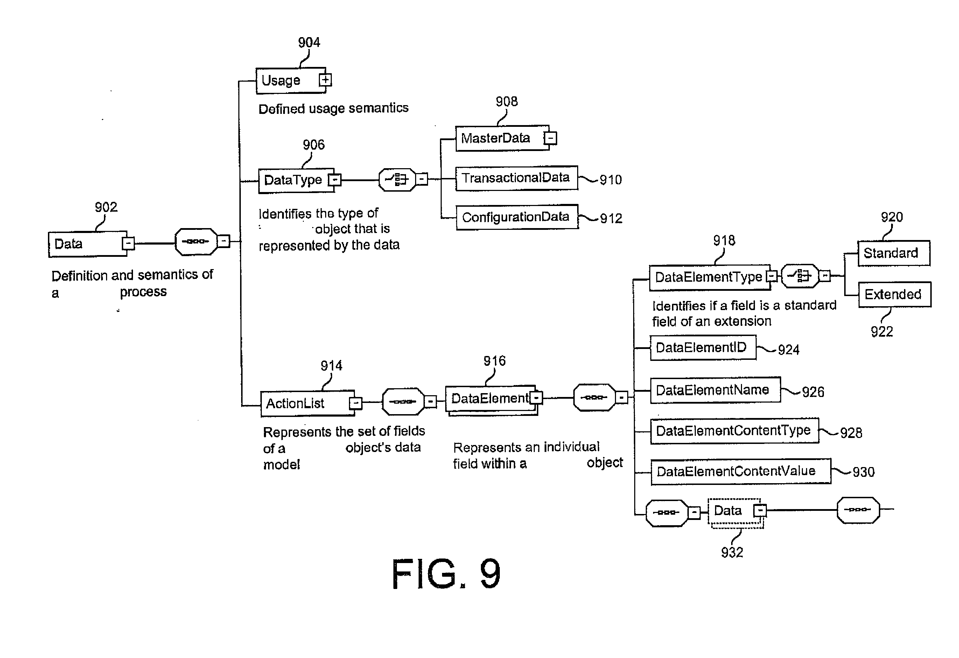

FIG. 9 provides further detail with regard to the data list 528/538 of FIGS. 5/6. Specifically, as shown, data 902 used or produced may be associated with corresponding defined usage semantics 904. A data type 906 may be used to identify the type of software object represented by particular data. For example, as shown, the data type 906 may include master data 908, transactional data 910, and/or configuration data 912.

Further, data elements 914 may be used to represent a set of fields of a software object's data model. Corresponding data elements 916 may thus represent an individual field within a software object. Then, the data element 916, as shown, may be associated with a data element type 918 that identifies whether a field is a standard field 920 or an extension 922. The data element 916 may also be associated with a data element ID 924, a data element name 926, a data element content type 928, and a data element content value 930. Finally with respect to FIG. 9, the data element may be further associated with a data collection 932 of child software objects.

FIG. 10, as referenced above, provides further detail with respect to the service list 530/540 of FIGS. 5/6. As shown, a service 1002 may be associated with corresponding definition and semantics. Specifically, as shown, usage semantics 1004 may be included. Further, a technical service type 1006 for the service 1002 may be specified, such as, e.g., REST 1008, SOAP 1110 and/or XML 1012.

Further with respect to FIG. 10, a service interface 1014 may be included which identifies a manner in which a related service 1002 may be connected and consumed. Consequently, the service interface 1014 may specify an end point URI (uniform resource identifier) 1016 associated with the service. Further, a service schema URI 1018 may be provided as a URI pointing a schema that defines input and output parameters for the service 1002 in question.

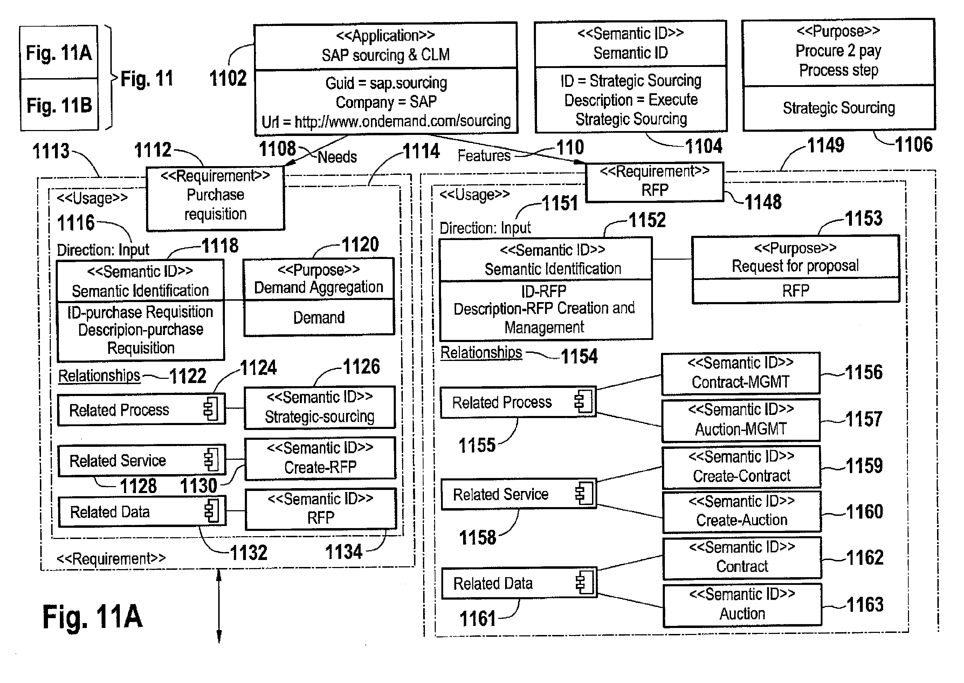

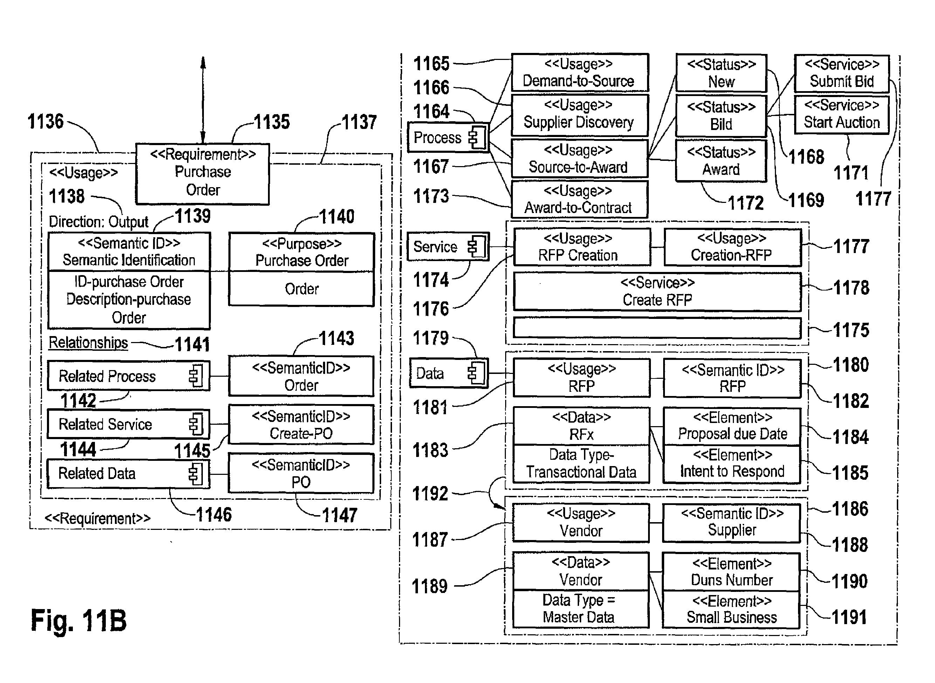

FIG. 11 is a diagram of an application-specific metamodel instance created in conjunction with the application metamodel described above with respect to FIGS. 4-10. Specifically, as shown, an application 1102 may provide strategic sourcing technologies and techniques. As shown, the application 1102 may be associated with corresponding attributes corresponding to the attributes 404 of FIG. 4. Specifically, as shown, such attributes may include a GUID, a company identifier, and a corresponding URL. Further, a semantic ID 1104 corresponding to the semantic ID 412 of FIG. 4 may be included which itself may include a purpose 1106 corresponding, for example, to the purpose 508 of FIG. 5, which provides a machine-readable declaration of the semantic usage of the application in question.

Further, the example of FIG. 11 provides specific instances of needs 1108, corresponding to the needs 416 of FIG. 4, as well as features 1010 corresponding to the features 414 of FIG 4. Then, in the specific example, the needs 1108 may include a first requirement 1112 related to a purchase requisition. As shown, the requirement structure 1113 includes usage semantics 1114, again corresponding to the related structures of FIGS. 5, 6. Specifically, as shown, a direction 1116 specifies an input direction, and a semantic ID 1118 provides an ID for a purchase requisition and associated description. Again, the semantic ID 1118 is linked to a purpose 1120, e.g., a purpose of aggregating demand.

Then, relationships 1122 may specify related processes 1124, such as may be associated with a semantic ID 1126 for strategic sourcing. Similarly, a related service 1128 may be associated with a semantic ID for creating a request for proposal (RFP). Further, related data 1132 may be associated with a semantic ID for 1134 for the RFP itself.

Similar, and supply to a second need/requirement 1135 for a purchase order, specifically, as shown, the requirement 1136 includes usage semantics 1137, including a direction 1138 specifying an output direction. A semantic ID 1139 again specifies an ID (i.e., purchase order) and associated description, and is associated with a purpose 1140 of providing a purchase order.
Relationships 1141 specify a related process 1142 having a semantic ID 1143 for an order to be issued. A related service 1144 is associated with a semantic ID 1145 describing creation of a purchase order (PO). Further, related data 1146 is associated with a semantic ID for the PO 1147 itself.
Similar comments apply to the example RFP requirement 1148, and associated data structure 1149. Specifically, as shown, a usage semantics 1150 specifies a direction 1151 as an input direction. A semantic ID 1152 provides a corresponding RFP identifier and description, along with a purpose 1153 specifying the purpose of request for a proposal.

Relationships 1154 include a related software process 1155 having a semantic 1156 for contract file management, and a semantic ID 1157 for auction file management. A related service 1158 is associated with a semantic ID 1159 for creation of a contract file, as well as a semantic ID 1160 for creation of an auction file. Related data 1161 is associated with a semantic ID 1162 for the resulting contract file itself while, similarly, a semantic 1163 provides the created/managed auction file.

Further, a process 1164 corresponding to the description of FIG. 8 includes usage semantics 1165 describing a demand-to-source, a usage net 1166 related to supplier discovery, usage semantics 1167 relating source-to-award, and usage semantics 1173 relating award-to-contract. As further shown, the usage semantics 1167 may include a status 1168 (new), a status 1169 (bid), and status 1172 (award). As also shown, the status 1169 may include a specified service 1170 for submitting a bid file, as well as a service 1171 for starting a related auction processing task.

A service 1174 corresponding conceptually to the service of FIG. 10, includes a structure 1175 that specifies usage semantics 1176 related to RFP creation, which has a semantic ID 1177 associated therewith. Then, a service 1178 is specified as having a service type SOAP, along with a relevant URI and service schema URI. Then, data 1179, corresponding to FIG. 9, provides data structure 1180 which specifies usage semantics 1181 related to an RFP, along with a corresponding semantic ID 1182. A data type 1183 specifies an RFx with element 1184 related to a proposal due date, and element 1185 related to an intent to respond. Then, structure 1186 includes usage semantics 1187 for a vendor, having a semantic ID 1188 shown as "supplier." A data type 1189 for the vendor will be shown as master data, where, in the example, one element is a DUNS number 1190, and a second element 1191 identifies the vendor. Finally with respect to FIG. 9, a relationship 1192 is also illustrated between the data structures 1180, 1186.

Thus, with respect to the above description of FIGS. 1-10, the application-specific metamodel instance of FIG. 11 may be understood to illustrate such an instance for an underlying sourcing application. In the example, the various features 1110 illustrate that the application in question has the capabilities to provide an RFP. Further, the needs 1108 specify that, in order to provide the RFP, the application may desire or require a second application to generate a purchase requisition 1112 and/or a purchase order 1135.

As described in detail, the application in the example of FIG. 11 may thus represent, for example, the requisition application 104 of FIG. 2A, in which the needs 1108 correspond to the bill of needs 204 described with respect thereto, and the features 1110 correspond to the application features 202. Then, some second application and corresponding application-specific metamodel instance, not specifically illustrated with respect to FIG. 11, and corresponding to the sourcing application 108 of FIG. 2A, may be discovered within the repository 115. Thereupon, the application of FIG. 11 may easily be integrated with one or more such applications in order to fulfill the needs 1108 in an automatic, cost effective, and efficient manner.

For the sake of further illustration example, a developed XML schema for representing one of the semantic metamodels 102 of FIG. 1 is provided below. Of course, it may be appreciated that the provided XML schema is intended merely for the sake of further illustration example with respect to a particular implementation of such a semantic metamodel, in conjunction with the examples provided above with respect to FIGS. 4-11. Thus, in this regard, the provided XML schema should not be understood to be limiting of the types of current and future techniques that may be utilized to represent the semantic metamodels 102. <?xml version="1.0" encoding="UTF-8"?>!

```
 2 <!-- Created by by author -->!
 3 <xs:schema xmlns:xs="http://www.w3.org/2001/XMhSchema"
 ... elementFormDefault="qualified" attributeForm-
 Default="unqualified">!7
 4 <xs:element name="Application">!
 5 <xs:annotation>!
 6 <xs:documentation>This is the metamodel for an
 ... application and its usage semantics</xs:documentation>!
 7 </xs:annotation>!
 8 <xs:complexType>!
 9 <xs:sequence>!
 10 <xs:element name="SemanticID" type="SemanticID"/>!
 11 <xs:element name="Features">!
 12 <xs:annotation>!
 13 <xs:documentation>The set of requirements filled
 ... by the application and exposed for external
 use</xs:documentation>!
 14 </xs:annotation>!
 15 <xs:complexType>!
 16 <xs:sequence>!
 17 <xs:element name="Requirement"
 ... type-"Requirement" minOccurs="0" maxOccurs="unbounded"/>!
 18 </xs:sequence>!
 19 </xs:complexType>!
 20 </xs:element>!
 21 <xs:element name="Needs">!
 22 <xs:annotation>!
 23 <xs:documentation>The set of requirements that
 ...this applications needs to be filled by some other applica-
 tion or
 ... service</xs:documentation>!
 24 </xs:annotation>!
 25 <xs:complexType>!
 26 <xs:sequence>!
 27 <xs:element name="Requirement"
 ... type="Requirement" minOccurs="0" maxOccurs="unbounded"/>!
 28 </xs:sequence>!
 29 </xs:complexType>!
 30 </xs:element>!
 31 </xs:sequence>!
 32 <xs:attribute na-
 me="guid"type="xs:string"use="required">!
 33 <xs:annotation>!
 34 <xs:documentation>Globally unique application
 ... identifier</xs:documentation>!
 35 </xs:annotation>!
 36 </xs:attribute>!
 37 <xs:attribute na-
 me="company"type="xs:string"use="required">!
 38 <xs:annotation>!
 39 <xs:documentation>The company responsible for the
 ...application</xs:documentation>!
 40 </xs:annotation>!
 41 </xs:attribute>!
 42 <xs:attribute name="url" type="xs:anyURI"
 use="optional">!
 43 <xs:annotation>!
 44 <xs:documentation>URL to the responsible
 ... company</xs:documentation>!
 45 </xs:annotation>!
 46 </xs:attribute>!
 47 </xs:complexType>!
 48 </xs:element>!
 49 <xs:element name="Process">!
 50 <xs:annotation>!
 51 <xs:documentation>Definition and semantics of a
 ...Process</xs:documentation>!
 52 </xs:annotation>!
 53 <xs:complexType>!
 54 <xs:sequence>!
 55 <xs:element ref="Usage"/>!
 56 <xs:element name="StatusList">!
 57 <xs:annotation>!
 58 <xs:documentation>Enumerates the Phases in the
 ... process lifecycle</xs:documentation>!
 59 </xs:annotation>!
 60 <xs:complexType>!
 61 <xs:sequence>!
 62 <xs:element name="Status" minOccurs="0"
 ... maxOccurs="unbounded">!
 63 <xs:complexType>!
 64 <xs:sequence>!
 65 <xs:element ref="Usage"/>!
 66 <xs:element name="Name"/>!
 67 <xs:element name="ID"/>!
 68 <xs:element ref="Service"
 ...minOccurs="0" maxOccurs="unbounded"/>!
 69 </xs:sequence>!
 70 </xs:complexType>!
 71 </xs:element>!
 72 </xs:sequence>!
 73 </xs:complexType>!
 74 </xs:element>!
 75 <xs:element name="ActionList">!
 76 <xs:annotation>!
 77 <xs:documentation>Enumerates the set of
 ... available process actions</xs:documentation>!
 78 </xs:annotation>!
 79 <xs:complexType>!
 80 <xs:sequence>!
 81 <xs:element name="Action" minOccurs="0"
 81... maxOccurs="unbounded">!
 82 <xs:complexType>!
 83 <xs:sequence>!
 84 <xs:element ref="Usage"/>!
 85 <xs:element name="Name"/>!
 86 <xs:element name="ID"/>!
 87 <xs:element ref="Service"
 ... minOccurs="0" maxOccurs="unbounded"/>!
 88 </xs:sequence>!
 89 </xs:complexType>!
 90 </xs:element>!
 91 </xs:sequence>!
 92 </xs:complexType>!
 93 </xs:element>!
 94 </xs:sequence>!
 95 </xs:complexType>!
 96 </xs:element>!
 97 <xs:element name="Service">!
 98 <xs:annotation>!
 99 <xs:documentation>Definition and semantics of a
 ... service</xs:documentation>!
 100 </xs:annotation>!
 101 <xs:complexType>!
 102 <xs:sequence>!
 103 <xs:element ref="Usage"/>!
 104 <xs:element name="ServiceType">!
 105 <xs:annotation>!
 106 <xs:documentation>The technical type for the
 ... service</xs:documentation>!
 107 </xs:annotation>!
 108 <xs:complexType>!
 109 <xs:choice>!
 110 <xs:element name="REST"/>!
 111 <xs:element name="SOAP"/>!
 112 <xs:element name="XML"/>!
 113 </xs:choice>!
 114 </xs:complexType>!
 115 </xs:element>!
 116 <xs:element name="ServiceInterface">!
 117 <xs:annotation>!
 118 <xs:documentation>Identifies how to connect to
 ...and consume a service</xs:documentation>!
 119 </xs:annotation>!
 120 <xs:complexType>!
 121 <xs:sequence>!
 122 <xs:element name="EndpointURI"
 ... type="xs:anyURI">!
 123 <xs:annotation>!
 124 <xs:documentation>Service Endpoint
 ... URI</xs:documentation>!
 125 </xs:annotation>!
 126 </xs:element>!
 127 <xs:element name="ServiceSchemaURI">!
 128 <xs:annotation>!
 129 <xs:documentation>URI to the schema
 ... that defines Input and Output Parameters for the
 ... service</xs:documentation>!
 130 </xs:annotation>!
 131 </xs:element>!
 132 </xs:sequence>!
 133 </xs:complexType>!
 134 </xs:element>!
 135 </xs:sequence>!
 136 </xs:complexType>!
 137 </xs:element>!
 138 <xs:element name="Data">!
 139 <xs:annotation>!
 140 <xs:documentation>Data used or pro-
 duced</xs:documentation>!
 141 </xs:annotation>!
 142 <xs:complexType>!
 143 <xs:sequence>!
 144 <xs:element ref="Usage"/>!
 145 <xs:element name="DataType">!
 146 <xs:annotation>!
 147 <xs:documentation>Identifies the what type of
 ...object is represented by the data</xs:documentation>!
 148 </xs:annotation>!
 149 <xs:complexType>!
 150 <xs:choice>!
 151 <xs:element name="MasterData"/>!
 152 <xs:element name="TransactionalData"/>!
 153 <xs:element name="ConfigurationData"/>!
 154 </xs:choice>!
 155 </xs:complexType>!
 156 </xs:element>!
 157 <xs:element name="DataElements">!
 158 <xs:annotation>!
 159 <xs:documentation>Represents the set of fields
 of
 ...an object's data model</xs:documentation>!
 160 </xs:annotation>!
 161 <xs:complexType>!
 162 <xs:sequence>!
 163 <xs:element name="DataElement"
 ... maxOccurs="unbounded">!
 164 <xs:annotation>!
 165 <xs:documentation>Represents an
 165... individual field within an object</xs:documentation>!
 166 </xs:annotation>!
 167 <xs:complexType>!
 168 <xs:sequence>!
 169 <xs:element
 ... name="DataElementType">!
 170 <xs:annotation>!
 171
 ...<xs:documentation>Identifies if a field is a standard field
 or an extension</xs:documentation>!
 172 </xs:annotation>!
 173 <xs:complexType>!
 174 <xs:choice>!
 175 <xs:element
 ... name="Standard"/>!
 176 <xs:element
 ... name="Extended"/>!
 177 </xs:choice>!
 178 </xs:complexType>!
 179 </xs:element>!
 180 <xs:element
 ... name="DataElementID"/>!
 181 <xs:element
 ... name="DataElementName"/>!
 182 <xs:element
 ... name="DataElementContentType"/>!
 183 <xs:element
 ... name="DataElementContentValue"/>!
 184 <xs:sequence>!
 185 <xs:element ref="Data"
 ... minOccurs="0" maxOccurs="unbounded">!
 186 <xs:annotation>!
 187
 ... <xs:documentation>This represents a collection of child
 ... objects</xs:documentation>!
 188 </xs:annotation>!
 189 </xs:element>!
 190 </xs:sequence>!
 191 </xs:sequence>!
 192 </xs:complexType>!
 193 </xs:element>!
 194 </xs:sequence>!
 195 </xs:complexType>!
 196 </xs:element>!
 197 </xs:sequence>!
 198 </xs:complexType>!
 199 </xs:element>!
 200 <xs:element name="Usage">!
 201 <xs:annotation>!
 202 <xs:documentation>Defined usage seman-
 tics</xs:documentation>!
 203 </xs:annotation>!
 204 <xs:complexType>!
 205 <xs:sequence>!
 206 <xs:element name="SemanticID" type="SemanticID">!
 207 <xs:annotation>!
 208 <xs:documentation>Identifies semantic
 ... usage</xs:documentation>!
 209 </xs:annotation>!
 210 </xs:element>!
 211 <xs:element name="Direction" type="Direction">!
 212 <xs;annotation>!
 213 <xs:documentation>Identifies the direction of
 ... flow</xs:documentation>!
 214 </xs:annotation>!
 215 </xs:element>!
 216 <xs:element name="Relationships" ty-
 pe="Relationships">!
 217 <xs:annotation>!
 218 <xs:documentation>The set of valid relations-
 hips
 ... and associations</xs:documentation>!
 219 </xs:annotation>!
 220 </xs:element>!
 221 </xs:sequence>!
 222 </xs:complexType>!
 223 </xs:element>!
 224 <xs:complexType name="Relationships">!
 225 <xs:annotation>!
 226 <xs:documentation>Defines relationships and
 ... dependencies</xs:documentation>!
 227 </xs:annotation>!
 228 <xs:sequence>!
 229 <xs:element name="Relationship" minOccurs="0"
 ...maxOccurs="unbounded">!
 230 <xs:complexType>!
 231 <xs:sequence>!
 232 <xs:element name="RelatedProcesses"
 ... minOccurs="0">!
 233 <xs:annotation>!
 234 <xs:documentation>List of related
 ... processes</xs:documentation>!
 235 </xs:annotation>!
 236 <xs:complexType>!
 237 <xs:sequence>!
 238 <xs:element name="RelatedProcess"
 ... maxOccurs="unbounded">!
 239 <xs:complexType>!
 240 <xs:sequence>!
 241 <xs:element
 ... name="SemanticID" type="SemanticID">!
 242 <xs:annotation>!
 243
 ... <xs:documentation>Associates the current related process re-
 ference to the
 ... actual defined process</xs:documentation>!
 244 </xs:annotation>!
 245 </xs:element>!
 246 </xs:sequence>!
 247 </xs:complexType>!
 248 </xs:element>!
 249 </xs:sequence>!
 250 </xs:complexType>!
 251 </xs:element>!
 252 <xs:element name="RelatedData" minOccurs="0">!
 253 <xs:annotation>!
 254 <xs:documentation>List of related
 ... data</xs:documentation>!
 255 </xs:annotation>!
 256 <xs:complexType>!
 257 <xs:sequence>!
 258 <xs:element name="RelatedData"
 ... maxOccurs="unbounded">!
 259 <xs:complexType>!
 260 <xs:sequence>!
 261 <xs:element
 ...name="SemanticID" type="SemanticID">!
 262 <xs:annotation>!
 263
 ... <xs:documentation>Associates the current related data refe-
 rence to the actual defined data</xs:documentation>!
 264 </xs:annotation>!
 265 </xs:element>!
 266 </xs:sequence>!
 267 </xs:complexType>!
 268 </xs:element>!
 269 </xs:sequence>!
 270 </xs:complexType>!
 271 </xs:element>!
 272 <xs:element name="RelatedServices" minOc-
 curs="0">!
 273 <xs:annotation>!
 274 <xs:documentation>List of related
 ... services</xs:documentation>!
 275 </xs:annotation>!
 276 <xs:complexType>!
 277 <xs:sequence>!
 278 <xs:element name="RelatedService">!
 279 <xs:complexType>!
 280 <xs:sequence>!
 281 <xs:element
 ... name="SemanticID" type="SemanticID">!
 282 <xs:annotation>!
 283
 ... <xs:documentation>Associates the current related service re-
 ference to the actual defined service</xs:docurnentation>!
 284 </xs:annotation>!
 285 </xs:element>!
 286 </xs:sequence>!
 287 </xs:complexType>!
 288 </xs:element>!
 289 </xs:sequence>!
 290 </xs:complexType>!
 291 </xs:element>!
 292 </xs:sequence>!
 293 </xs:complexType>!
 294 </xs:element>!
 295 </xs:sequence>!
 .296 </xs:complexType>!
 297 <xs:complexType name="Direction">!
 298 <xs:annotation>!
 299 <xs:documentation>Identifies the direction of
 flow.Either
 ...into component or out of component.</xs:documentation>!
 300 </xs:annotation>!
 301 <xs:choice> !
 302 <xs:element name="Input"/>!
 303 <xs:element name="Output"/>!
 304 </xs:choice>!
 305 </xs:complexType>!
 306 <XS:complexType name="SemanticID">!
 307 <xs:annotation>!
 308 <xs:documentation>Identifies the semantics of the
 ... element</xs:documentation>!
 309 </xs:annotation>!
 310 <xs:sequence>!
 311 <xs:element name="ID">!
 312 <xs:annotation>!
 313 <xs:documentation>Uniquely identifies the seman-
 tic
 ... usage</xs:documentation>!
 314 </xs:annotation>!
 315 </xs:element>!
 316 <xs:element name="DeSCription">!
 317 <xs:arinotatlon>!
 318 <xs:documentation>A human-readable description
 ofthe
 ... usage. This is included in generated documentati-
 on</xs:documentation>!
 319 </xs:annotation>!
 320 </xs:element>!
 321 <xs:element name="Purpose">!
 322 <xs:annotation>!
 323 <xs:documentation>This is the machine-readable
 ... declaration of the semantic usage</xs:documentation>!
 324 </xs:annotation>!
 325 <xs:complexType>!
 326 <xs:choice>!
 327 <xs:element name="StandardPurpose">!
 328 <xs:annotation>!
 329 <xs:documentation>The set of pre-defined
 ... purposes that are valid for all applica-
 tions</xs:documentation>!
 330 </xs:annotatlon>!
 331 <xs:complexType>!
 332 <xs:choice>!
 333 <xs:element name="Integration"/>!
 334 <xs:element name="ProcessStep"/>!
 335 <xs:element name="Analytics"/>!
 336 <xs:element name="Monitoring"/>!
 337 </xs:choice>!
 338 </xs:complexType>!
 339 </xs:element>!
 340 <xs:element name="ExtendedPurpose">!
 341 <xs:annotation>!
 342 <xs:documentation>This identifies an
 ... Application-Specific purpose or semantic usa-
 ge</xs:documentation>!
 343 </xs:annotation>!
 344 </xs:element>!
 345 </xs:choice>!
 346 </xs:complexType>!
 347 </xs:element>!
 348 </xs:sequence>!
 349 </xs:complexType>!
 350 <xs:complexType name="Requirement">!
 351 <xs:annotation>!
 352 <xs:documentation>A functional requirement that is
 either
 ... needed or provided</xs:documentation>!
 353 </xs:annotation>!
 354 <xs:sequence>!
 355 <xs:element ref="Usage"/>!
 356 <xs:element name="ProcessList">!
 357 <xs:annotation>!
 358 <xs:documentation>The set of processes for the
 ... containing requirement</xs:documentation>!
 359 </xs:annotation>!
 360 <xs:complexType>!
 361 <xs:sequence>!
 362 <xs:element ref="Process" minOccurs="0"
 ... maxOccurs="unbounded"/>!
 363 </xs:sequence>!
 364 </xs:complexType>!
 365 </xs:element>!
 366 <xs:element name="DataList">!
 367 <xs:annotation>!
 368 <xs:documentation>The set of data for the defined
 ... requirement</xs:documentation>!
 369 </xs:annotation>!
 370 <xs:complexType>!
 371 <xs:sequence>!
 372 <xs:element ref="Data" minOccurs="0"
 ... maxOccurs="unbounded">!
 373 <xs:annotation>!
 374 <xs:documentation>Data used or produced.
 ...This represents an object.</xs:documentation>!
 375 </xs:annotation>!
 376 </xs:element>!
 377 </xs:sequence>!
 378 </xs:complexType>!
 379 </xs:element>!
 380 <xs:element name="ServiceList">!
 381 <xs:annotation>!
 382 <xs:documentation>The set of data for the defined
 ... requirement</xs:documentation>!
 383 </xs:annotation>!
 384 <xs:complexType>!
 385 <xs:sequence>!
 386 <xs:element ref="Service" minOccurs="0"
 ... maxOccurs="unbounded"/>!
 387 </xs:sequence>!
 388 </xs:complexType>!
 389 </xs:element>!
 390 </xs:sequence>!
 391 </xs:complexType>!
 392 </xs:schema>!
 393
```

### Code Portion 1

For the sake of further illustration examples, the following is a simplified example of an automatic mobile application discovery and integration scenarios.

In this example, a mobile telecommunication device (e.g. device 132 of FIG. 1) is connected to the internet. The mobile telecommunication device comprises a phone dialer application installed (i.e. the first mobile application). For example, the phone dialer application may have private characteristics. One of these private characteristics is the feature "Phone Dialer" (e.g. the first mobile application may represent the requisition application 104 of FIG. 2A).

The functionality of phone dialer application can be enhanced with a "Contact List". Since this capability does not yet exist on the mobile telecommunication device, this is one of the needs (or extended characteristics of the phone dialer application) that can be fulfilled by an external processing task.

The semantics of the extended characteristics that it needs to be fulfilled by any Contact List may be described as follows.
- Data: Contact<Name, Address, Email, Phone>
- Semantic Actions: List Contacts, Create Contact, Update Contact, Find

In order to enhance the phone dialer application with the additional functionality of Contact list, the above extended characteristics may be used to find a second mobile application or service whose private characteristics (i.es features) match the extended characteristics of the phone dialer application. The percent of this matching determines whether there is a good integration candidate.

The second mobile application may either be a separate application that is installed and integrated on the same mobile telecommunication device or a separate application that is installed on a separate second mobile telecommunication device and integrated into the first mobile telecommunication device

Upon first use of the mobile telecommunication device, a user is presented with a dialog asking him if he wants to add Contact List. Upon receiving a request to add the Contact List, the mobile telecommunication device establishes an internet connection to a model repository (e.g. repository 115 of FIG. 1). The model repository stores a representation metamodel (e.g. as the meatmodel described above with respect to FIGS. 4-10) for the phone dialer application. The representation metamodel comprises a set of attributes defining semantics of the characteristics of the phone dialer application. For example, in case the representation model is a linked data structure e.g. a graph of nodes, a node may be associated with the semantic "Contact"; and another node may be associated with the semantic "Contact Action" etc.

A representation metamodel instance (e.g. as the instance shown in FIG. 11) may be created (e.g. by the transformation engine 120) by for example instantiating the attribute "Contact" using the extended characteristics, namely Name, Address, Email, Phone and also instantiating the attribute "Contact Action" using the extended characteristics List Contacts, Create Contact, Update Contact, Find.

In addition, the model repository may store multiple representation metamodel instances for mobile applications.

In order to find the mobile application that has the functionality of Contact list, a mapping may be performed (e.g. by at least one of the sematic 122 process 124 and data 126 mapper) between the extended charcteristics of the phone dialer application with the multiple representation metamodel instances to find a representation metamodel instance that fulfils the Contact List needs. For example a selected representation metamodel instance that represents a Contact List application may be found with the following semantics that describe the features (or private chacrteristics) of the Contact List application:
- Data: Contact<Name, Address, Fax, Phone, Email, Office Phone, Title, Suffix>
- Semantic Actions: List Contacts, Create Contact, Delete Contact, Copy Contact, Find
- Services: <[Contact]>:ListContacts, <Contact>:Create, Delete:<Contact>, <Contact>:Copy:<Contact>, <Contact>:Find:<Contact.Name>
- Service URL...
- iOS Application URL, Android Application URL, Blackberry Application URL,

Additionally, the selected representation metamodel instance may represent a set of Needs (extended characteristics) of the Contact List application:
- Data: Address<Street, City, State, Country, Postal Code>
- Semantic Actions: Geolocate Address

The mapping may identify that the features (private characteristics) of the Contact List application sufficiently aligns with the needs (extended characteristics) of the phone dialer application. In fact, the Contact List application in this example has more capabilities than the needs of the phone dialer application.

The selected representation metamodel instance may also describe multiple URLs of the Contact List application. URLs may be provided to either allow installing the Contact List application on the mobile telecommunication device or using the Contact List application (e.g as a service) that is already installed on another mobile telecommunication device.

Upon identifying (selecting) the Contact List application, either the mobile telecommunication device (automatic) or the user (manual) can decide if the Contact List application should be installed locally in the mobile telecommunication device. If a local install is desired, the appropriate OS-specific link is used to automatically install the Contact List Locally. If it was instead decided to use the Contact List application as a service that is installed on a separate device, then no installation step is required.

Further, an integration may be required for both cases: a local Installation or service on another device. The Contact List application provides a set of services/actions (e.g. List Contacts) which accepts specific data (e.g. Contact) and can be used to integrate (e.g. by the integration engine 130) the phone dialer application with the Contact List application.

The selected representation metamodel instance is saved in the mobile telecommunication device. The mobile telecommunication device has a complete list of locally installed applications (including features and needs characteristics), and External applications or services that have been selected from the model repository to satisfy a given Need.

For example, the mobile telecommunication device maintains the relationship between the needs of all applications and the mobile telecommunication device itself, and the Features of Local Applications, External Services, and Current Device that meet those needs.

At this stage, the phone dialer application needs for a Contact List application has been satisfied since the selected representation metamodel instance has been found and the Contact list application is available (e.g. locally installed). As an in tegration step the phone dialer application will now have an action e.g. button or link in a user interface of the phone dialer application to show the user's contacts (If the need for a contact list was not satisfied, then the Contact List action would not be displayed in the user interface).

For example, when the user clicks the Contact List action in the phone dialer application, a local registry of the mobile telecommunication device tells it which service to use to retrieve a list of contacts. If the Contact List application is installed locally, a call is made to the Contact List application to return the list of contacts. If the Contact List is installed on a separate device, the same service call is made, but the call is routed over the internet to the separate device or service. The list of contacts is returned from the Contact List application or service and displayed in the user interface.

Continuing with another example based on the above example, the mobile telecommunication device has its own phone dialer application that is now integrated with a Contact List application. For this example, the Contact List application is locally installed.

From above, it can be noted that the Contact List application also defined a Need for a "Geolocate Address". Upon launching (click) the Contact List action the mobile telecommunication device may receive a selection of an individual. contact to display its details. One of these details is the contact's address. The contacts details are presented with a dialog asking if the user wants to enable Mapping features. If the mobile telecommunication device receives a request to enable the Mapping features, the same discovery, Installation (or service binding), and integration steps that were followed for the example above may also be followed for finding and integrating a Map application which has the necessary "Geolocate Address" semantics.

As a result of the integration of the Map application, the contact's address becomes hyperlinked. When the user clicks on the hyperlink, a map of the contact's address is shown.

Implementations of the various techniques described herein may be implemented in digital electronic circuitry, or in computer hardware, firmware, software, or in combinations of them. Implementations may implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program, such as the computer program(s) described above, can be written in any form of programming language, including compiled or interpreted languages, and can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps may be performed by one or more programmable processors executing a computer program to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in special purpose logic circuitry.

To provide for interaction with a user, implementations may be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.
Implementations may be implemented in a computing system that includes a back-end component, e.g., as a data server, or that includes a middleware component, e.g., an application server, or that includes a front-end component, e.g., a client computer having a graphical user interface or a Web browser through which a user can interact with an implementation, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

While certain features of the described implementations have been illustrated as described herein, many modifications, substitutions, changes and equivalents will now occur to those skilled in the art. It is, therefore, to be understood that the appended claims are intended to cover all such modifications and changes as fall within the scope of the claims.

## Claims

1. A method in a first mobile telecommunication device (132) comprising a first mobile application (104), the first mobile telecommunication device (132) comprising a metamodel selector (116), metadata manager (112), transformation engine (120), and an integration engine (130); the method comprising:
- providing a set of representation metamodels for mobile applications, wherein a representation metamodel of the set of representation meta-models comprises a set of attributes defining semantics of the characteristics of a given mobile application (104);
- determining, by the metadata manager (112), first application metadata of the first mobile application (104), the first application metadata describing characteristics of the first mobile application (104), the characteristics of the first mobile application (104) comprise first private characteristics and first extended characteristics, wherein the first private characteristics indicate software and/or hardware configurations required for running the first mobile application (104) and the first extended characteristics are characteristics to be fulfilled by a second application (108);
- selecting, by the metamodel selector (116), using the first application metadata and the set of attributes a representation metamodel of the set of representation metamodels for representing the characteristics of the first mobile application (104);
- transforming, by the transformation engine (120), the first application metadata into a first application-specific metamodel instance of the selected representation metamodel; and
- comparing characteristics of the second mobile application with the first extended characteristics, and integrating using the comparison results, by the integration engine (130), the first mobile application (104) with the second mobile application (108) using the first application-specific metamodel instance, thereby enhancing the functionality of the first mobile application with the functionality of the second mobile application (108).

2. The method of claim 1, wherein the first mobile telecommunication device (132) is connected to a server (115) via a digital telecommunication network, wherein the set of representation metamodels and a plurality of application-specific metamodel instances including the first application-specific metamodel instance are stored in the server (115).

3. The method of claim 1 or 2, wherein the first extended characteristics are characteristics to be fulfilled by the second mobile application (108) in order to be integrated with the first mobile application; wherein integrating comprises:
- receiving a request to integrate the second mobile application (108) with the first mobile application (104);
- determining second application metadata of the second mobile application (108), the second application metadata describing characteristics of the second mobile application (108), wherein the characteristics of the second mobile application comprise second private characteristics, wherein the second private characteristics indicate software and/or hardware configurations required for running the second mobile application (108);
- mapping the second private characteristics with at least part of the first application-specific metamodel instance that represents the first extended characteristics;
- integrating the second mobile application (108) with the first mobile application (104) based on the mapping.

4. The method of claim 2, wherein the first extended characteristics are characteristics to be fulfilled by the second mobile application in order to be integrated with the first mobile application (104); wherein integrating comprises:
- reading at least part of the first application specific instance that represents the first extended characteristics for determining that the second mobile application is to be integrated with the first mobile application (104);
- searching in the server (115) an application-specific metamodel instance having private characteristics that match the first extended characteristics, wherein the searched application-specific metamodel instance corresponds to the second mobile application (108).

5. The method of claim 4, further comprising: determining that there are not enough resources to run the second mobile application (108) in the first mobile telecommunication device (132), wherein searching comprises searching an application-specific metamodel instance having private characteristics that match the first extended characteristics and that corresponds to a mobile application that is comprised in another mobile telecommunication device, wherein the searched application-specific metamodel instance corresponds to the second mobile application which is in a second mobile telecommunication device connected to the first mobile telecommunication device (132) via a digital telecommunication network.

6. The method of claim 3, further comprising: transforming the second application metadata into a second application-specific metamodel instance of a second selected representation metamodel; wherein comparing the second private characteristics with the first extended characteristics is performed using the first and second application-specific metamodel instances.

7. The method of any of the previous claims, wherein selecting the representation metamodel comprises:
- using the first application metadata for mapping each characteristic of at least part of the characteristics of the first mobile application (104) with the set of attributes;
- identifying for each characteristic a corresponding attribute using the mapping;
- assigning to each characteristic of the at least part of the characteristics of the first mobile application (104) a metric indicative of a degree of a match between that characteristic and the corresponding attribute in the set of mapped attributes;
- selecting the representation metamodel using the metrics.

8. The method of any of the previous claims, wherein the representation metamodel comprises a linked data structure representing a hierarchy of characteristics of the first mobile application, the linked data structure comprising nodes representing the characteristics, each node of the nodes being associated with a semantic ID (412) indicative of a characteristic of the first mobile application (104).

9. The method of claim 8, wherein selecting the representation metamodel comprises: for each characteristic of at least part of the characteristics, traversing the linked data structure and determining a corresponding characteristic in the linked data structure; wherein selecting is performed based on the number of characteristics of the of at least part of the characteristics having corresponding characteristics in the linked data structure.

10. The method of claim 1, wherein the representation metamodel comprises an XML schema representing the characteristics of the mobile application wherein the XML schema is stored as an XML file in a server (115) connected to the first mobile telecommunication device via a digital telecommunication network.

11. The method of any of preceding claims, wherein transforming the first application metadata comprises determining attributes of the set of attributes that map to at least part of the characteristics of the first mobile application (104); instantiating the determined attributes using the at least part of the characteristics of the first mobile application (104).

12. The method of any of the previous claims 3-11, wherein the first and second private characteristics comprise:
- inter and intra software dependencies of the first and second mobile application (104, 108) respectively;
- one or more internal processing tasks to be executed by the first and second mobile application (104, 108) respectively;
- a set of instructions for installing the first and second mobile application (104, 108) in a given system respectively;
wherein the first and second extended characteristics comprise:
- one or more external processing tasks to be executed by a mobile application to be integrated with the first and second mobile application (104, 108) respectively;
wherein each processing task of the one or more internal and external processing tasks comprises a list of processes, a list of data and a list of services used by the processing task.

13. The method of claim 12, further comprising
- assigning to each data of the list of data a data attribute that describes semantics of the data;
- assigning to each process of the list of processes a process attribute that describes semantics of the process;
- assigning to each service of the list of services a service attribute that describe semantics of the service;
wherein each of the data, process and service attributes is associated with a unique semantic ID (412).

14. The method of claims 13, wherein the mapping of at least part of the characteristics of the first mobile application with the set of attributes is performed using at least one of the data, process and service attributes.

15. A computer program product comprising computer executable instructions to perform the method steps of the method of any one of the preceding claims.

16. A mobile telecommunication device (132) comprising a first mobile application (104); wherein a set of representation metamodels for mobile applications, wherein a representation metamodel of the set of representation metamodels comprises a set of attributes defining semantics of the characteristics of a given mobile application are provided; the mobile telecommunication device (132) comprising:
- a metadata manager (112) configured for determining first application metadata of the first mobile application, the first application metadata describing characteristics of the first mobile application, the characteristics of the first mobile application (104) comprise first private characteristics and first extended characteristics, wherein the first private characteristics indicate software and/or hardware configurations required for running the first mobile application (104) and the first extended characteristics are characteristics to be fulfilled by a second mobile application (108);
- a metamodel selector (116) configured for selecting using the first application metadata and the set of attributes a representation metamodel of the set of representation metamodels for representing the characteristics of the first mobile application;
- transformation engine (120) configured for transforming the first application metadata into a first application-specific metamodel instance of the selected representation metamodel; and
- an integration engine (130) configured for comparing characteristics of the second mobile application with the first extended characteristics, and integrating using the comparison results the first mobile application with the second mobile application (108) using the first application-specific metamodel instance, thereby enhancing the functionality of the first mobile application with the functionality of the second mobile application.

## Patentansprüche

1. Verfahren bei einer ersten mobilen Telekommunikationsvorrichtung (132) umfassend eine erste Mobilapplikation (104), wobei die erste mobile Telekommunikationsvorrichtung (132) einen Metamodellselektor (116), Metadaten-Manager (112), eine Transformationsfunktionseinheit (120) und eine Integrationsfunktionseinheit (130) umfasst; wobei das Verfahren Folgendes umfasst:
- das Bereitstellen eines Satzes von Darstellungsmetamodellen für Mobilapplikationen, wobei ein Darstellungsmetamodell des Satzes von Darstellungsmetamodellen einen Satz von Attributen umfasst, die die Semantik der Charakteristiken einer vorgegebenen Mobilapplikation (104) definieren;
- das Bestimmen, durch den Metadaten-Manager (112), von ersten Applikationsmetadaten der ersten Mobilapplikation (104), wobei die ersten Applikationsmetadaten Charakteristiken der ersten Mobilapplikation (104) beschreiben, wobei die Charakteristiken der ersten Mobilapplikation (104) erste private Charakteristiken und erste erweiterte Charakteristiken umfassen, wobei die ersten privaten Charakteristiken Software- und/oder Hardwarekonfigurationen angeben, die für das Betreiben der ersten Mobilapplikation (104) erforderlich sind, und die ersten erweiterten Charakteristiken Charakteristiken sind, die durch eine zweite Mobilapplikation (108) erfiillt werden sollen;
- das Auswählen, durch den Metamodellselektor (116) unter Anwendung der ersten Applikationsmetadaten und des Satzes von Attributen, eines Darstellungsmetamodells des Satzes von Darstellungsmetamodellen zum Darstellen der Charakteristiken der ersten Mobilapplikation (104);
- das Transformieren, durch die Transformationsfunktionseinheit (120), der ersten Applikationsmetadaten in eine erste applikationsspezifische Metamodellinstanz des ausgewählten Darstellungsmetamodells; und
- das Vergleichen von Charakteristiken der zweiten Mobilapplikation mit den ersten erweiterten Charakteristiken und das Integrieren mit Hilfe der Vergleichsergebnisse durch die Integrationsfunktionseinheit (130), der ersten Mobilapplikation (104) mit der zweiten Mobilapplikation (108) mit Hilfe der ersten applikationsspezifischen Metamodellinstanz, wodurch die Funktionalität der ersten Mobilapplikation mit der Funktionalität der zweiten Mobilapplikation (108) verbessert wird.

2. Verfahren nach Anspruch 1, wobei die erste mobile Telekommunikationsvorrichtung (132) mit einem Server (115) über ein digitales Telekommunikationsnetzwerk verbunden ist, wobei der Satz von Darstellungsmetamodellen und eine Mehrzahl von applikationsspezifischen Metamodellinstanzen, einschließlich der ersten applikationsspezifischen Metamodellinstanz, in dem Server (115) gespeichert sind.

3. Verfahren nach Anspruch 1 oder 2, wobei die ersten erweiterten Charakteristiken Charakteristiken sind, die durch die zweite Mobilapplikation (108) erfiillt werden müssen, um in die erste Mobilapplikation integriert zu werden; wobei das Integrieren Folgendes umfasst:
- das Empfangen einer Aufforderung, die zweite Mobilapplikation (108) in die erste Mobilapplikation (104) zu integrieren;
- das Bestimmen zweiter Applikationsmetadaten der zweiten Mobilapplikation (108), wobei die zweiten Applikationsmetadaten die Charakteristiken der zweiten Mobilapplikation (108) beschreiben, wobei die Charakteristiken der zweiten Mobilapplikation zweite private Charakteristiken umfassen, wobei die zweiten privaten Charakteristiken Software- und/oder Hardwarekonfigurationen angeben, die für das Betreiben der zweiten Mobilapplikation (108) erforderlich sind;
- das Zuordnen der zweiten privaten Charakteristiken zu mindestens einem Teil der ersten applikationsspezifischen Metamodellinstanz, die die ersten erweiterten Charakteristiken darstellt;
- das Integrieren der zweiten Mobilapplikation (108) in die erste Mobilapplikation (104) auf der Basis des Zuordnens.

4. Verfahren nach Anspruch 2, wobei die ersten erweiterten Charakteristiken Charakteristiken sind, die durch die zweite Mobilapplikation erfüllt werden müssen, um in die erste Mobilapplikation (104) integriert zu werden; wobei das Integrieren Folgendes umfasst:
- das Lesen mindestens eines Teils der ersten applikationsspezifischen Instanz, die die ersten erweiterten Charakteristiken darstellt, zum Bestimmen, dass die zweite Mobilapplikation in die erste Mobilapplikation (104) integriert werden soll;
- das Suchen im Server (115) nach einer applikationsspezifischen Metamodellinstanz, die private Charakteristiken aufweist, die mit den ersten erweiterten Charakteristiken übereinstimmen, wobei die gesuchte applikationsspezifische Metamodellinstanz der zweiten Mobilapplikation (108) entspricht.

5. Verfahren nach Anspruch 4, ferner umfassend: das Bestimmen, dass nicht ausreichend Ressourcen vorliegen zum Betreiben der zweiten Mobilapplikation (108) in der ersten mobilen Telekommunikationsvorrichtung (132), wobei das Suchen das Suchen einer applikationsspezifischen Metamodellinstanz umfasst, die private Charakteristiken aufweist, die mit den ersten erweiterten Charakteristiken übereinstimmen und die einer Mobilapplikation entsprechen, die in einer anderen mobilen Telekommunikationsvorrichtung enthalten sind, wobei die gesuchte applikationsspezifische Metamodellinstanz der zweiten Mobilapplikation entspricht, die sich in einer zweiten mobilen Telekommunikationsvorrichtung befindet, die mit der ersten mobilen Telekommunikationsvorrichtung (132) durch ein digitales Telekommunikationsnetzwerk verbunden ist.

6. Verfahren nach Anspruch 3, ferner Folgendes umfassend: das Transformieren der zweiten Applikationsmetadaten in eine zweite applikationsspezifische Metamodellinstanz eines zweiten ausgewählten Darstellungsmetamodells, wobei das Vergleichen der zweiten privaten Charakteristiken mit den ersten erweiterten Charakteristiken mit Hilfe der ersten und zweiten applikationsspezifischen Metamodellinstanzen durchgeführt wird.

7. Verfahren nach einem der vorhergehenden Ansprüche, wobei das Auswählen des Darstellungsmetamodells Folgendes umfasst:
- das Verwenden der ersten Applikationsmetadaten zum Zuordnen jeder Charakteristik mindestens eines Teils der Charakteristiken der ersten Mobilapplikation (104) zu dem Satz von Attributen;
- das Identifizieren eines entsprechenden Attributs für jede Charakteristik mit Hilfe des Zuordnens;
- das Zuweisen zu jeder Charakteristik des mindestens einen Teils der Charakteristiken der ersten Mobilapplikation (104) einer Metrik, die für einen Grad einer Übereinstimmung zwischen dieser Charakteristik und dem entsprechenden Attribut des Satzes zugeordneter Attribute indikativ ist;
- das Auswählen des Darstellungsmetamodells mit Hilfe der Metrik.

8. Verfahren nach einem der vorhergehenden Ansprüche, wobei das Darstellungsmetamodell eine verlinkte Datenstruktur umfasst, die eine Hierarchie von Charakteristiken der ersten Mobilapplikation darstellt, wobei die verlinkte Datenstruktur Datenknoten umfasst, die die Charakteristiken darstellen, wobei jeder Datenknoten der Datenknoten mit einer semantischen ID (412) assoziiert ist, die für eine Charakteristik der ersten Mobilapplikation (104) indikativ ist.

9. Verfahren nach Anspruch 8, wobei das Auswählen des Darstellungsmetamodells Folgendes umfasst: für jede Charakteristik mindestens eines Teils der Charakteristiken, das Überqueren der verknüpften Datenstruktur und Bestimmen einer entsprechenden Charakteristik in der verknüpften Datenstruktur, wobei das Auswählen auf der Basis der Anzahl von Charakteristiken des mindestens einen Teils der Charakteristiken durchgeführt wird, der entsprechende Charakteristiken in der verknüpften Datenstruktur aufweist.

10. Verfahren nach Anspruch 1, wobei das Darstellungsmetamodell ein XML-Schema umfasst, das die Charakteristiken der Mobilapplikation darstellt, wobei das XML-Schema als XML-Datei in einem Server (115) gespeichert ist, der mit der ersten mobilen Telekommunikationsvorrichtung über ein digitales Telekommunikationsnetzwerk verbunden ist.

11. Verfahren nach einem der vorhergehenden Ansprüche, wobei das Transformieren der ersten Applikationsmetadaten das Bestimmen umfasst von Attributen des Satzes von Attributen, die mindestens einem Teil der Charakteristiken der ersten Mobilapplikation (104) zugeordnet sind; und das Instanziieren der bestimmten Attribute mit Hilfe des mindestens eines Teils der Charakteristiken der ersten Mobilapplikation (104).

12. Verfahren nach einem der vorhergehenden Ansprüche 3 - 11, wobei die ersten und zweiten privaten Charakteristiken Folgendes umfassen:
- Inter- und Intra-Software-Abhängigkeiten der ersten bzw. zweiten privaten Mobilapplikation (104, 108);
- eine oder mehrere interne Bearbeitungsaufgaben, die durch die erste bzw. zweite Mobilapplikation (104, 108) ausgeführt werden sollen;
- einen Satz von Anweisungen für das Installieren der ersten und zweiten Mobilapplikation (104, 108) jeweils in einem vorgegebenen System;
wobei die ersten und zweiten erweiterten Charakteristiken Folgendes umfassen:
- eine oder mehrere externe Bearbeitungsaufgaben, die durch eine Mobilapplikation ausgeführt werden sollen, die in die erste bzw. zweite Mobilapplikation (104, 108) integriert werden sollen;
wobei jede Bearbeitungsaufgabe des einen oder der mehreren internen und externen Bearbeitungsaufgaben eine Liste von Prozessen, eine Liste von Daten und eine Liste von Serviceleistungen, die für die Bearbeitungsaufgabe benutzt werden, umfasst.

13. Verfahren nach Anspruch 12, ferner Folgendes umfassend:
- das Zuweisen zu jedem Datenelement der Liste von Daten eines Datenattributs, das die Semantik der Daten beschreibt;
- das Zuweisen zu jedem Prozess der Liste von Prozessen eines Prozessattributs, das die Semantik des Prozesses beschreibt;
- das Zuweisen zu jeder Serviceleistung der Liste von Serviceleistungen eines Serviceattributs, das die Semantik der Serviceleistung beschreibt;
wobei jedes der Daten, Prozesse und Serviceleistungen mit einer einzigen semantischen ID (412) assoziiert ist.

14. Verfahren nach Anspruch 13, wobei das Zuordnen mindestens eines Teils der Charakteristiken der ersten Mobilapplikation zu dem Satz von Attributen mit Hilfe mindestens einer der Daten-, Prozess- und Serviceleistungsatttribute durchgeführt wird.

15. Computerprogrammprodukt umfassend computerausführbare Anweisungen zum Durchführen der Verfahrensschritte des Verfahrens nach einem der vorhergehenden Ansprüche.

16. Mobile Telekommunikationsvorrichtung (132) umfassend eine erste Mobilapplikation (104); wobei ein Satz von Darstellungsmetamodellen für Mobilapplikationen, wobei ein Darstellungsmetamodell des Satzes von Darstellungsmetamodellen einen Satz von Attributen umfasst, die die Semantik der Charakteristiken einer vorgegebenen Mobilapplikation definieren, bereitgestellt sind; wobei die mobile Telekommunikationsvorrichtung (132) Folgendes umfasst:
- einen Metadatenmanager (112), der zum Bestimmen erster Applikationsmetadaten der ersten Mobilapplikation konfiguriert ist, wobei die ersten Applikationsmetadaten Charakteristiken der ersten Mobilapplikation beschreiben, die Charakteristiken der ersten Mobilapplikation (104) erste private Charakteristiken und erste erweiterte Charakteristiken umfassen, wobei die ersten privaten Charakteristiken Software- und/oder Hardwarekonfigurationen angeben, die für das Betreiben der ersten Mobilapplikation (104) erforderlich sind, und die ersten erweiterten Charakteristiken Charakteristiken sind, die durch eine zweite Mobilapplikation (103) erfiillt werden sollen;
- einen Metamodellselektor (116), der für das Auswählen, mit Hilfe der ersten Applikationsmetadaten und des Satzes von Attributen, eines Darstellungsmetamodells des Satzes von Darstellungsmetamodellen zum Darstellen der Charakteristiken der ersten Mobilapplikation konfiguriert ist;
- eine Transformationsfunktionseinheit (120), die zum Transformieren der ersten Applikationsmetadaten in eine erste applikationsspezifische Metamodellinstanz des ausgewählten Darstellungsmetamodells konfiguriert ist; und
- eine Integrationsfunktionseinheit (130), die zum Vergleichen von Charakteristiken der zweiten Mobilapplikation mit den ersten erweiterten Charakteristiken und Integrieren mit Hilfe der Vergleichsergebnisse der ersten Mobilapplikation in die zweite Mobilapplikation (108) mit Hilfe der ersten applikationsspezifischen Metamodellinstanz konfiguriert ist, wodurch die Funktionalität der ersten Mobilapplikation mit der Funktionalität der zweiten Mobilapplikation verbessert wird.

## Revendications

1. Procédé dans un premier dispositif mobile de télécommunication (132) comprenant une première application mobile (104), le premier dispositif mobile de télécommunication (132) comprenant un sélecteur de méta modèles (116), un gestionnaire de métadonnées (112), un moteur de transformation (120), et un moteur d'intégration (130) ; le procédé comprenant :
- la mise au point d'un ensemble de métamodèles de représentation pour les applications mobiles, dans lequel un métamodèle de la représentation de l'ensemble des métamodèles de représentation comprend un ensemble d'attributs qui définissent la sémantique des caractéristiques d'une application mobile donnée (104) ;
- la détermination, par le gestionnaire des métadonnées (112), des premières métadonnées d'application de la première application mobile (104), les premières métadonnées d'application décrivant les caractéristiques de la première application mobile (104), les caractéristiques de la première application mobile (104) comprennent les premières caractéristiques privées et les premières caractéristiques étendues, dans lesquelles les premières caractéristiques privées décrivent les configurations logicielles et/ou matérielles nécessaires pour faire fonctionner la première application mobile (104) et les premières caractéristiques étendues sont des caractéristiques qui doivent être respectées par une seconde application mobile (108) ;
- le choix, par le sélecteur de méta modèles (116), de l'utilisation des premières métadonnées d'application et de l'ensemble des attributs d'un métamodèle de la représentation dans l'ensemble des métamodèles de représentation, pour représenter les caractéristiques de la première application mobile (104) ;
- la transformation, par le moteur de transformation (120), des premières métadonnées d'application dans la première instance du métamodèle spécifique de l'application du métamodèle de la représentation choisie ; et
- la comparaison des caractéristiques de la seconde application mobile avec les premières caractéristiques étendues, et leur intégration en utilisant les résultats de la comparaison par le moteur d'intégration (130), de la première application mobile (104) avec la seconde application mobile (108) en utilisant la première instance du métamodèle spécifique de l'application, améliorant ainsi la fonctionnalité de la première application mobile avec la fonctionnalité de la seconde application mobile (108).

2. Procédé selon la revendication 1, dans lequel le premier dispositif mobile de télécommunication (132) est connecté à un serveur (115) par l'intermédiaire d'un réseau digital de télécommunication, dans lequel l'ensemble des métamodèles de représentation et une pluralité d'instances du métamodèle spécifique de l'application incluant l'instance du métamodèle spécifique de la première application sont stockés dans le serveur (115).

3. Procédé selon les revendications 1 ou 2, dans lequel les premières caractéristiques étendues sont les caractéristiques devant être respectées par la seconde application mobile (108) afin d'être intégrées avec la première application mobile ; dans lequel l'intégration comprend :
- la réception d'une requête pour intégrer la seconde application mobile (108) avec la première application mobile (104) ;
- la détermination des secondes métadonnées d' application de la seconde application mobile (108), les secondes métadonnées d'application décrivant les caractéristiques de la seconde application mobile (108), où les caractéristiques de la seconde application mobile comprennent les secondes caractéristiques privées, dans lesquelles les secondes caractéristiques privées indiquent les configurations logicielles et/ou matérielles nécessaires pour faire fonctionner la seconde application mobile (108) ;
- la mise en correspondance des secondes caractéristiques privées avec au moins une partie de l'instance du métamodèle spécifique de la première application qui représente les premières caractéristiques étendues ;
- l'intégration de la seconde application mobile (108) avec la première application mobile (104) basée sur la mise en correspondance.

4. Procédé selon la revendication 2, dans lequel les premières caractéristiques étendues sont les caractéristiques devant être respectées par la seconde application mobile pour être intégrées avec la première application mobile (104) ; dans lequel l'intégration comprend :
- la lecture d'au moins une partie de l'instance spécifique de la première application qui représente les premières caractéristiques étendues pour déterminer que la seconde application mobile doit être intégrée avec la première application mobile (104) ;
- la recherche dans le serveur (116) d'une instance du métamodèle spécifique de l'application ayant des caractéristiques privées qui s'associent aux premières caractéristiques étendues, dans laquelle l'instance du métamodèle spécifique de l'application correspond à la seconde application mobile (108).

5. Procédé selon la revendication 4, qui comprend en outre : la détermination qu'il n'y ait pas assez de ressources pour faire fonctionner la seconde application mobile (108) dans le premier dispositif mobile de télécommunication (132), dans lequel la recherche comprend la recherche d'une instance du métamodèle spécifique de l'application ayant des caractéristiques privées qui associent les premières caractéristiques étendues et qui correspond à une application mobile qui est comprise dans un autre dispositif mobile de télécommunication, dans lequel l'instance du métamodèle spécifique de l'application recherchée correspond à la seconde application mobile qui est dans un second dispositif mobile de télécommunication connecté au premier dispositif mobile de télécommunication (132) par l'intermédiaire d'un réseau digital de télécommunication.

6. Procédé selon la revendication 3, qui comprend en outre : la transformation des secondes métadonnées d'application dans une instance du méta modèle spécifique de la seconde application d'un métamodèle d'une seconde représentation choisie ; dans lequel la comparaison des secondes caractéristiques privées avec les premières caractéristiques étendues est réalisée en utilisant les instances du métamodèle spécifique à la première et à la seconde application.

7. Procédé selon l'une quelconque des revendications précédentes, dans lequel le choix du métamodèle de la représentation comprend :
- l'utilisation des métadonnées de la première application pour mettre en correspondance chacune des caractéristiques d'au moins une partie des caractéristiques de la première application mobile (104) avec l'ensemble des attributs ;
- l'identification, pour chacune des caractéristiques, de l'attribut correspondant en utilisant la mise en correspondance ;
- l'attribution à chacune des caractéristiques de la au moins une partie des caractéristiques de la première application mobile (104) d'une mesure indiquant le degré d'association entre cette caractéristique et l'attribut correspondant dans l'ensemble des attributs mis en correspondance ;
- le choix du métamodèle de représentation en utilisant les indicateurs.

8. Procédé selon l'une quelconque des revendications précédentes, dans lequel le métamodèle de représentation comprend une structure des données corrélées représentant une arborescence des caractéristiques de la première application mobile, la structure des données corrélées comprenant des noeuds représentant les caractéristiques, chacun des noeuds parmi les noeuds étant associé à un ID *(identifiant ?)* sémantique (412) indicateur d'une caractéristique de la première application mobile (104).

9. Procédé selon la revendication 8, dans lequel le choix du métamodèle de représentation comprend : pour chacune des caractéristiques de la au moins une partie des caractéristiques, le passage à travers la structure des données corrélées et la détermination d'une caractéristique correspondante dans la structure des données corrélées, dans lequel le choix est réalisé en se basant sur le nombre des caractéristiques de la au moins une partie des caractéristiques ayant les caractéristiques correspondantes dans la structure des données corrélées.

10. Procédé selon la revendication 1, dans lequel le métamodèle de représentation comprend un schéma XML représentant les caractéristiques de l'application mobile dans laquelle le schéma XML est stocké comme un dossier XML dans le serveur (115) connecté au premier dispositif mobile de télécommunication par l'intermédiaire d'un réseau digital de télécommunication.

11. Procédé selon l'une quelconque des revendications précédentes, dans lequel la transformation des premières métadonnées d'application comprend la détermination des attributs de l'ensemble des attributs qui met en correspondance au moins une partie des caractéristiques de la première application mobile (104) ; l'instanciation des attributs déterminés en utilisant l'au moins une partie des caractéristiques de la première application mobile (104).

12. Procédé selon l'une quelconque des revendications précédentes 3 à 11, dans lequel les premières et secondes caractéristiques privées comprennent :
- les dépendances inter logicielle et intra logicielle de la première et de la seconde application mobile (104, 108), respectivement ;
- une ou plusieurs opérations de traitement internes à exécuter par la première et la seconde application mobile (104, 108), respectivement ;
- un ensemble d'instructions pour l'installation de la première et de la seconde application mobile (104, 108), respectivement, dans un système donné ;
dans lequel les premières et secondes caractéristiques étendues comprennent :
- une ou plusieurs opérations de traitement externes devant être exécutées par une application mobile à intégrer avec la première et la seconde application mobile (104, 108) respectivement ;
dans laquelle chacune des opérations de traitement de la ou des plusieurs opérations de traitement internes et externes comprend une liste d'opérations, une liste de données et une liste de services utilisés par l'opération de traitement.

13. Procédé selon la revendication 12, qui comprend en outre
- l'attribution à chacune des données de la liste des données d'un attribut de données qui décrit la sémantique des données ;
- l'attribution à chacune des opérations de la liste des opérations d'un attribut d'opération qui décrit la sémantique de l'opération ;
- l'attribution à chacun des services de la liste des services d'un attribut de service qui décrit la sémantique du service ;
dans lequel chacun des attributs de données, d'opération et de service est associé à une ID sémantique unique (412).

14. Procédé selon la revendication 13, dans lequel la mise en correspondance de l'au moins une partie des caractéristiques de la première application mobile avec l'ensemble des attributs est réalisée en utilisant au moins l'un des attributs parmi les attributs de données, d'opération et de service.

15. Produit de programme d'ordinateur comprenant des instructions exécutables par ordinateur pour réaliser les étapes de procédé du procédé selon l'une quelconque des revendications précédentes.

16. Dispositif mobile de télécommunication (132) comprenant une première application mobile (104) ; dans lequel un ensemble de métamodèles de représentation pour les applications mobiles, dans lequel un métamodèle de la représentation de l'ensemble des métamodèles de représentation comprend un ensemble d'attributs définissant la sémantique des caractéristiques d'une application mobile donnée, sont mis au point ; le dispositif mobile de télécommunication (132) comprenant :
- un gestionnaire de métadonnées (112) configuré pour déterminer les premières métadonnées d'application de la première application mobile, les premières métadonnées d'application décrivant les caractéristiques de la première application mobile, les caractéristiques de la première application mobile (104) comprennent les premières caractéristiques privées et les premières caractéristiques étendues, où les premières caractéristiques privées indiquent les configurations logicielles et/ou matérielles nécessaires pour faire fonctionner la première application mobile (104) et les premières caractéristiques étendues sont les caractéristiques qui doivent être respectées par la seconde application mobile (108) ;
- un sélecteur de méta modèles (116) configuré pour effectuer une sélection en utilisant les premières métadonnées d'application et l'ensemble des attributs d'un méta modèle de la représentation de l'ensemble des métamodèles de représentation pour représenter les caractéristiques de la première application mobile ;
- le moteur de transformation (120) configuré pour transformer les premières métadonnées d'application en une instance du métamodèle spécifique de la première application du métamodèle de la représentation choisie ; et
- un moteur d'intégration (130) configuré pour comparer les caractéristiques de la seconde application mobile avec les premières caractéristiques étendues, et réalisant l'intégration en utilisant les résultats de la comparaison de la première application mobile avec la seconde application mobile (108) en utilisant l'instance du métamodèle spécifique de la première application, améliorant par ce moyen la fonctionnalité de la première application mobile avec la fonctionnalité de la seconde application mobile.
